(19) Europäisches Patentamt
European Patent Office
Office européen des brevets

(11) EP 4 071 199 A1

(12) EUROPEAN PATENT APPLICATION

(43) Date of publication:
**12.10.2022 Bulletin 2022/41**

(21) Application number: **21305441.4**

(22) Date of filing: **07.04.2021**

(51) International Patent Classification (IPC):
*C08G 77/06* (2006.01) *C08G 77/16* (2006.01)
*C08G 77/20* (2006.01) *C08G 77/26* (2006.01)
*C08G 77/00* (2006.01) *C09D 183/08* (2006.01)

(52) Cooperative Patent Classification (CPC):
**C08G 77/80; C08G 77/06; C08G 77/16; C08G 77/20; C08G 77/26; C09D 183/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **TotalEnergies OneTech**
  **92400 Courbevoie (FR)**
- **Centre national de la recherche scientifique**
  **75016 Paris (FR)**
- **Sorbonne Université**
  **75006 Paris (FR)**
- **Universite de Rouen Normandie**
  **76821 Mont Saint Aignan Cedex (FR)**

(72) Inventors:
- **GIUSTI, Pierre**
  **76600 Le Havre (FR)**
- **PIPARO, Marco**
  **76600 Le Havre (FR)**
- **JOUSSET, Gaëlle**
  **78260 Achères (FR)**
- **MANIQUET, Adrien**
  **40300 PEYREHORADE (FR)**
- **CARDINAEL, Pascal**
  **76230 Isneauville (FR)**
- **TINTAS, Mihaela-Liliana**
  **76000 Rouen (FR)**
- **MALLET, Jean-Maurice**
  **94400 Vitry sur seine (FR)**

(74) Representative: **Fédit-Loriot**
**22, rue du Général Foy**
**75008 Paris (FR)**

# (54) POLYSILOXANE POLYMER COMPOSITIONS INCLUDING A PHTHALOCYANINE RING OR A PORPHYRIN RING, THEIR PREPARATION PROCESS AND THEIR USE AS STATIONARY PHASES IN HIGH TEMPERATURE GAS CHROMATOGRAPHY

(57) The present invention relates to a polymeric composition in a form of a copolymer incorporating one or more siloxane building blocks of formula [-$SiR_1R_2O$-], where $R_1$ and $R_2$ are the same or different and are each selected from an aryl, an alkenyl and an alkyl group and a macrocyclic building block such as a phthalocyanine or a porphyrin, substituted or not. The copolymer of the invention may further include a third building block of formula [-$Si(CH_3)_2$-Ar-$Si(CH_3)_2$-O-], where Ar is selected from 1,4-disubstituted benzene, 4,4'- disubstituted 1,1'-biphenyl and 4,4'- disubstituted phenoxybenzene. These copolymers are particularly suited for forming stationary phases for gas chromatography, especially high-temperature gas chromatography.

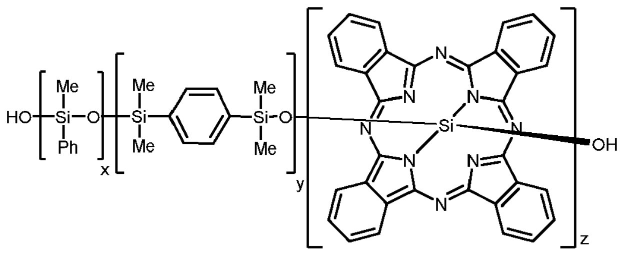

Figure 2



Processed by Luminess, 75001 PARIS (FR)

## Description

## FIELD OF THE INVENTION

The present invention relates to a polymeric composition in a form of a copolymer incorporating one or more siloxane building blocks and a macrocyclic building block such as a phthalocyanine or a porphyrin, substituted or not. The present invention also relates to a process for the preparation of such a copolymer, its use as a stationary phase for chromatography column, in particular for gas chromatography, and a method for the preparation of gas chromatography columns. These copolymers are particularly suited for forming stationary phases for chromatography, especially high-temperature gas chromatography.

## BACKGROUND OF THE INVENTION

Polysiloxanes are one of the most common stationary phases in gas chromatography. They are available in a large variety and generally they are stable, robust and versatile commercial stationary phases. Polydimethylsiloxane (PDMS) is a non-polar, rugged and high temperature stable stationary phase with a maximum allowable operating temperature (MAOT) that can operate up to 430°C as recommended by some manufacturers. The downfalls of such polymer are the very low polarity and the bleeding which is the degradation at high temperature. The main thermal degradation mechanism is a depolymerisation initiated by a "back-biting" mechanism in which the hydroxyl chain end attacks the polymer backbone releasing volatile cyclic polysiloxanes. Once initiated, the degradation of the polymer is progressive and leads, overtime, to decreased and irreproducible retention times. The precision of chromatographic retention time is an important analytical parameter in mono-dimensional (GC-FID and GC-MS) and particularly in comprehensive two-dimensional gas chromatography. Introducing phenyl groups to polysiloxane can improve the selectivity and polarity of the stationary phase. A high percentage of phenyl increase the polarity of the stationary phase, but will lead to a decrease of the MAOT. For example, a 50% Phenyl 50% dimethylpolysiloxane is a mid-polar stationary phase having a temperature limit from 340 to 365°C depending on the manufacturer. Similar to the thermal behavior of PDMS, the phenyl polysiloxanes are prone to degradation *via* the same mechanism. In order to limit depolymerization manufacturers incorporated silarylene groups in the backbone of the polymer and crosslinking between polymer chains. The main function of silarylene groups consists in thermal stabilization of the polymer due to a more rigid backbone that restricts the formation of cyclic degradation products. For example, a 35% phenyl silarylene-based stationary phase possesses a temperature limit from 370 to 400°C depending on the manufacturer.

In gas chromatography the majority of manufacturers classify stationary phases by polarity number (PN). This polarity number can be evaluated using the method developed by Rohrschneider and McReynolds. Table 1 gives the PN ranges and corresponding level of polarity. The high-temperature commercial columns are mostly non-polar, while very few are on the low range of intermediate polarity.

Table 1

| Polarity Number (PN) | Polarity |
|---|---|
| 0-10 | Non polar |
| 10-32 | Intermediate polar |
| 32-65 | Polar |
| 65-100 | Highly polar |
| 100-130 | Extremely polar |

Two-dimensional gas chromatography GC×GC in combination with other techniques have gained a lot of attention in analyzing various complex hydrocarbon-containing matrices. Due to the two-dimensional separation, a significantly increased chromatographic resolution can be achieved, resulting in structured 2D chromatograms that significantly improve chemical-class separation and interpretation. High-temperature comprehensive gas chromatography (HT-GC×GC) has proven to be a powerful technique for characterizing complex samples such as heavy petroleum cuts. This technique requires stationary phases with high to very high thermal stability but also high selectivity (polarity, shape selectivity, etc).

It is ideal to reunite properties like high thermal stability and polarity within the same polymer, but is very difficult to provide such stationary phases that can withstand temperatures over 400°C and are low-bleeding. Existing commercial stationary phases do not show sufficient high temperature resistance or sufficient selectivity. There is a need for stationary

phases having an excellent thermal stability, but also to provide good separation performances. Such stationary phases could particularly be useful to analyse very complex mixtures that require high temperature: hydrocarbons mixtures such as heavy diesel cuts, middle distillate, vacuum gas oil (VGO), pyrolysis plastic oils, biomass, biofuel, etc.

It is an object of the present invention to provide a copolymer, particularly suitable for stationary phase in chromatographic columns, in particular gas chromatography columns, which presents a very good thermal stability and the ability to separate polar and intermediate polar compounds.

**SUMMARY OF THE INVENTION**

It has now surprisingly been found that the above objectives can be attained either individually or in any combination by polysiloxane polymers comprising macrocyclic monomeric units.

In a first aspect, the present invention provides a polysiloxane polymeric composition having:

- a siloxane monomeric unit of formula (1) [-$SiR_1R_2O$-], where $R_1$ and $R_2$ are the same or different and are each selected from an aryl, an alkenyl and an alkyl group,
- a macrocyclic monomeric unit which is a macrocycle selected from a phthalocyanine and a porphyrin,

and in which the molar percent x of the siloxane monomeric unit in the polymeric composition is from 90 to 99% and the molar percent z of the macrocyclic monomeric unit is from 1 to 10%.

In a second aspect, the present invention provides a polysiloxane polymeric composition having:

- a siloxane monomeric unit of formula (1) [-$SiR_1R_2O$-], where $R_1$ and $R_2$ are the same or different and are each selected from an aryl, an alkenyl and an alkyl group,
- a macrocyclic monomeric unit which is a macrocycle selected from a phthalocyanine and a porphyrin,
- a third monomeric unit of formula (6):

$$[-Si(CH_3)_2-Ar-Si(CH_3)_2-O-] \qquad (6),$$

where Ar is selected from 1,4-disubstituted benzene, 4,4'-disubstituted 1,1'-biphenyl and 4,4'-disubstituted phenoxybenzene, and

the molar percent x of the siloxane monomeric unit is from 65 to 99%, the molar percent z of the macrocyclic monomeric unit is from 0.1 to 5%, the molar percent y of the third monomeric unit is from 1 to 35%.

Polymeric compositions according to the invention can be constructed as copolymers in the form of block copolymers with an alternating sequence of the above-mentioned structural units or under their random arrangement. Copolymers are understood in the context of the present invention as a broad term in the sense that not only polymeric compositions of two different monomer units, but also those with three or more different monomer units are understood.

Polymeric compositions according to the invention may be constructed such that the sum of x + z or x + y + z is ≥ 10. Preferably more than 90% by weight of the polymeric composition should have these values for x + y or x +y +z, more preferably more than 95%, more preferably more than 99% by weight. The sum of x + y or of x +y +z thus represents a measure of the chain length of the polymer.

One characteristic of a stationary phase is to be easy to coat in a thin film on the internal surface of a capillary tube. For this, a stationary phase is generally soluble in solvents with low boiling point (e.g. dichloromethane). On the other hand, a stationary phase generally possesses a chain length long enough to have high viscosity, meaning sufficient immobility to function as a column material. Polymeric compositions having the above-mentioned chain lengths are often soluble in organic solvents. An exact threshold for the chain length cannot be generally stated, since this is influenced by various factors such as the ratio of the structural units and their arrangement and type and amount of possibly further monomer components. However, the solubility of the polymeric compositions at the desired concentration can be easily checked by testing various solvents.

The polysiloxane polymeric compositions of the invention exhibit very high thermal stability, in particular when used as stationary phases in capillary columns for gas chromatography. A high thermal stability and low bleed along with more stable retention times was observed for temperatures of 400°C and more, e.g. for experiments running up to 420°C. In addition, the polysiloxane polymeric compositions of the invention show good selectivity towards intermediate polar and polar analytes, e.g. a mixture of polycyclic aromatic hydrocarbons (PAH), Grob's mix.

In addition, the polysiloxane polymeric compositions of the invention present a polarity used as stationary phase in chromatography, they may show a polarity number (P.N.) from 10 to 65, in particular from 10 to 32.

In a third aspect, the present invention provides a process for preparing a polysiloxane polymeric composition according to the first aspect of the invention comprising the following successive steps:

(A) mixing at least one alkoxysilane of formula (9) $Si(OR_3)_2R_1R_2$, where $R_1$ and $R_2$ are as defined in claim 1 and $R_3$ is an alkyl, an alkenyl or an aryl group, with a solvent and at least one macrocyclic molecule selected from the group consisting of a metallophthalocyanine, a metalloporphyrin, a metalloidphthalocyanine and a metalloidporphyrin and obtaining a first mixture, the proportions of the alkoxysilane and of the macrocyclic molecule being calculated to obtain a molar percent of a siloxane monomeric unit in the polymeric composition from 90 to 99% and a molar percent of the macrocyclic monomeric unit in the polymeric composition from 1 to 10%,

(B) adding to the first mixture of step (A) water and a catalyst selected from an acid or a base, and obtaining a second mixture containing a polysiloxane polymeric composition as defined with respect to the first aspect of the invention,

(C) evaporating the solvent and eliminating water and the catalyst from the second mixture to recover the polysiloxane polymeric composition as defined with respect to the first aspect of the invention.

In a fourth aspect, the present invention provides a process for preparing a polysiloxane polymeric composition according to the second aspect of the invention comprising the following successive steps:

(A1) mixing at least one alkoxysilane of formula (9) $Si(OR_3)_2R_1R_2$, where $R_1$ and $R_2$ are as defined in claim 3 and $R_3$ is an alkyl, an alkenyl or an aryl group, with a solvent and at least one macrocyclic molecule selected from the group consisting of a metallophthalocyanine, a metalloporphyrin, a metalloidphthalocyanine and a metalloidporphyrin an obtaining a premix, the proportions of the alkoxysilane and of the macrocyclic molecule being calculated to obtain a molar percent of a siloxane monomeric unit in the polymeric composition from 65 to 99% and a molar percent of macrocyclic monomeric unit of 0.1 to 5%,

(A2) adding to the premix of step (A1) at least one silanol of formula (10) $R''-Si(CH_3)_2-Ar-Si(CH_3)_2-R'''$, where R" and R''' are the same or different and are each selected from an halogen, an amine group, an hydroxyl group or an alkoxy group and where Ar is selected from 1,4-disubstituted benzene, 4,4'-disubstituted 1,1'-biphenyl and 4,4'-disubstituted phenoxybenzene, optionally previously dissolved in a second solvent, and obtaining a first mixture, the proportion of silanol being calculated to obtain a molar percent of the $[-Si(CH_3)_2-Ar-Si(CH_3)_2-O-]$ unit in the polymeric composition from 1 to 35%,

(B) adding to the first mixture of step (A2) water and a catalyst selected from an acid or a base, and obtaining a second mixture containing a polysiloxane polymeric composition as defined with respect to the second aspect of the invention,

(C) evaporating the solvent and eliminating water and the catalyst from the second mixture to recover the polysiloxane polymeric composition as defined with respect to the second aspect of the invention.

In a fifth aspect, the present invention provides the use of the polysiloxane polymeric composition of the present invention as a stationary phase in a capillary column for gas chromatography analysis, in particular high-temperature gas chromatography, especially for analysis of heavy boiling analytes, such as a hydrocarbon mixture.

In other words, the present invention provides a process for analysing a sample by gas chromatography, in particular high-temperature gas chromatography, comprising: passing a gaseous or volatilized compound to analyse through a capillary column of a gas chromatography apparatus, the interior surface of which is recovered with a film of the polysiloxane polymeric composition of the invention as a stationary phase.

In a sixth aspect, the present invention provides a capillary column for gas chromatography comprising a capillary tube having an internal surface, and deposited on this internal surface, a film of the polysiloxane polymeric composition of the present invention.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

## BRIEF DESCRIPTION OF THE FIGURES

**Figure 1** represents a reaction synthesis scheme of a phthalocyanine polymer of the invention.

**Figure 2** represents the structure of the polymer prepared by the reaction of Figure 1.

**Figure 3** is a TGA plot representing the weight loss percentage of 5 polymeric compositions of the invention as a function of the temperature.

**Figure 4** represents the thermal stability diagram acquired by GC-FID from analysis of **Polymer 1.** The abscissa represents time in minutes and the ordinate represents the signal of the detector in Pico Amperes.

**Figure 5** represents the gas chromatogram illustrating the separation and elution orders of a polar test mixture for capillary column coated with **Polymer 1.**

**Figure 6** represents the gas chromatogram illustrating the separation and elution orders of a polar test mixture for capillary column coated with **Polymer 2.**

**Figure 7** represents the gas chromatogram illustrating the separation of a mixture of PAH, obtained using a capillary column coated with **Polymer 1.**

**Figure 8** represents the gas chromatogram illustrating the separation of a mixture of PAH, obtained using a capillary column coated with **Polymer 2.**

**Figure 9** represents the chromatogram illustrating the separation of a mixture of PAH, obtained using a capillary column coated with **Polymer 5.**

## DETAILED DESCRIPTION OF THE INVENTION

When describing the invention, the terms used are to be construed in accordance with the following definitions, unless a context dictates otherwise.

As used herein, the singular forms "a", "an", and "the" include both singular and plural referents unless the context clearly dictates otherwise. By way of example, "a monomeric" means one monomeric unit or more than one monomeric unit, i.e. at least one monomeric unit.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all integer numbers and, where appropriate, fractions subsumed within that range (e.g. 1 to 5 can include 1, 2, 3, 4, 5when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

Preferred features and embodiments, polymers and uses of this invention are set herein below. Each feature and embodiment of the invention so defined may be combined with any other feature and/or embodiment unless clearly indicated to the contrary. In particular, any feature indicated as being preferred or advantageous may be combined with any other feature or features indicated as being preferred or advantageous. Hereto, the present invention is in particular

captured by any one or any combination of one or more of the below aspects and embodiments, with any other feature and/or embodiment.

Polysiloxane polymeric composition comprising two monomeric units

In a first embodiment, the polysiloxane polymeric composition including a macrocycle monomeric unit of the present invention has, and advantageously consists of,

- a siloxane monomeric unit of formula (1) [-$SiR_1R_2O$-], where $R_1$ and $R_2$ are the same or different and are each selected from an aryl, an alkenyl and an alkyl group,

- a macrocyclic monomeric unit which is a macrocycle selected from a phthalocyanine and a porphyrin, in particular selected from the group consisting of a metallophthalocyanine, a metalloporphyrin, a metalloidphthalocyanine and a metalloidporphyrin, those molecules being substituted or not,

and in which the molar percent of the siloxane monomeric unit in the polymeric composition is from 90 to 99% and the molar percent of the macrocyclic unit is from 1 to 10%.

The above polysiloxane polymeric composition may include one siloxane monomeric unit of formula (1) or two or more different siloxane monomeric units of formula (1) and one macrocyclic monomeric unit or two or more different macrocyclic monomeric units of the invention, in any combination.

In one embodiment, the above polysiloxane polymeric composition may include two different siloxane monomeric units of formula (1) and one macrocyclic monomeric unit or two different macrocyclic monomeric units of the invention.

In the siloxane monomeric unit of formula (1) [-$SiR_1R_2O$-], $R_1$ and $R_2$ may each preferably be chosen from a C6 aryl group and a C1-C4 alkyl group. Most preferably, $R_1$ and $R_2$ may each be chosen from a phenyl group and a methyl group. In particular, in certain embodiments, $R_1$ and $R_2$ may each be a methyl group, or $R_1$ and $R_2$ may each be a phenyl group, or $R_1$ may be a phenyl group and $R_2$ may be a methyl group.

As used herein, an "alkyl" is understood as a "($C_1$-$C_6$) alkyl", which refers to a monovalent straight or branched saturated hydrocarbon chain containing from 1 to 6 carbon atoms including, but not limited to, methyl, ethyl, n-propyl, iso-propyl, n-butyl, iso-butyl, sec-butyl, t-butyl, n-pentyl, n-hexyl, and the like.

As used herein, an "aryl group" may be an aromatic or heteroaromatic group.

The term "aromatic group" as used herein alone or as part of another group denotes optionally substituted homocyclic aromatic groups, preferably monocyclic or bicyclic (fused) groups, containing from 6 to 12 carbons in the ring portion, such as phenyl, naphthyl. Phenyl is the preferred aromatic group.

The term "heteroaromatic" as used herein alone or as part of another group denotes optionally substituted aromatic groups having 5 to 12 ring atoms, at least one heteroatom in at least one ring, and preferably 5 or 6 atoms in each ring. The remaining ring atoms are carbon atoms. The heteroaromatic group preferably has 1 to 3 heteroatoms preferably selected from O, N and S in the ring, and may be bonded to the remainder of the molecule through a carbon or heteroatom. Exemplary heteroaromatics include furyl, thiophenyl, carbazoyl, phenanthroyl, quinolinyl or isoquinolinyl and the like. Preferably, the heteroaromatic group is selected from a thiophenyl, furyl, carbazoyl, phenanthroyl, acridinyl, quinolinyl, isoxazolyl, pyrindinyl and pyrazinyl.

In an embodiment, the polysiloxane polymeric composition may comprise, or consist of, the two above mentioned monomeric units, these units being generally randomly distributed.

The macrocyclic monomeric unit (noted Mc) may be chosen from a phthalocyanine ring and a porphyrin ring. These rings may be peripherally substituted or not.

The phthalocyanine monomeric unit may have the following formula (2):

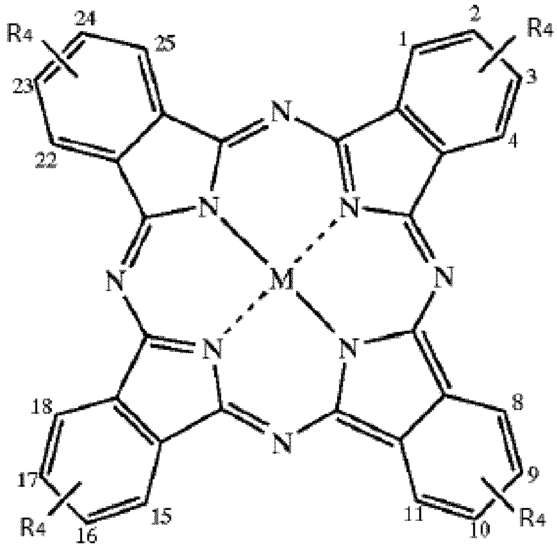

(2)

where M represents a central atom bonded to nitrogen atoms. This central atom may be a metal, generally having a valence of 4, in particular a transition metal, or metalloid, preferably a metalloid in particular selected from Si(IV) or Ti(IV). In a most preferred embodiment, the central atom is Si.

In an embodiment, the central atom M is bonded to nitrogen atoms of the phthalocyanine and to other atoms or group of atoms noted X and X', such bonding is thus noted MXX' where M is as defined above and X and X' are monovalent groups and are independently selected from:

- an OR group where R represents H, an alkyl, in particular a C1-C6 alkyl, preferably H, methyl, ethyl;
- an halide, in particular fluorine, bromine, chlorine or iodine anion, preferably Cl- and Br-;
- an amine, in particular secondary amines- typically of formula $R^1R^2N$ with $R^1$ and $R^2$ independently selected from an alkyl, in particular a C1-C6 alkyl, provided that at least one of $R^1$ and $R^2$ is not H-, especially a dialkylamine, preferably dimethylamine.

In a preferred embodiment, X are X' are the same.

The phthalocyanine unit may be substituted or not. Each of the isoindole ring substructure may accommodate 0, 1 or 2 $R_4$ substituents, with a preferred arrangement being 0 substituent or one $R_4$ substituent on each isoindole ring substructure. $R_4$ can be an alkyl or aryl group, preferably a C1-C4 alkyl group or a C6 aryl group. In an embodiment, $R_4$ is *tert*-butyl group. $R_4$ can also be a halide, in particular fluorine, bromine, chlorine or iodine anion, preferably Cl- and Br-; or an OR group, where R represents H, alkyl, in particular C1-C6 alkyl, preferably H, methyl, ethyl.

A phthalocyanine monomeric unit (with or without peripheral substituents) is noted Pc, and a phthalocyanine monomeric unit having a central atom bonded is noted PcM. Such notation includes the cases where M is bonded to other atoms or group of atoms X, X' as explained above.

The porphyrin monomeric unit may in particular have the following formula (3):

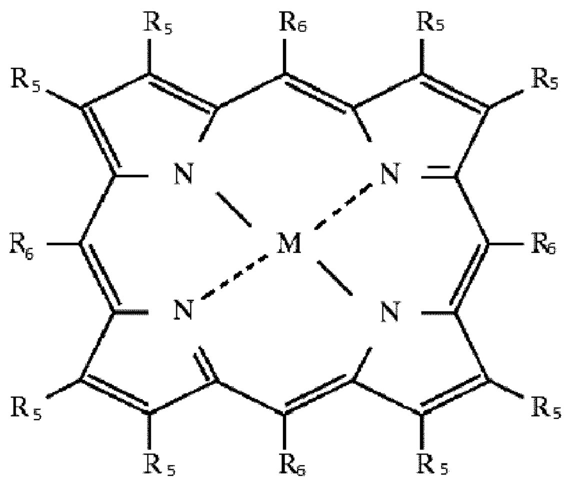

(3)

where M represents a central atom bonded to nitrogen atoms. This central atom may be a metal, generally in a valence of 4, in particular a transition metal, or metalloid, preferably a metalloid in particular selected from Si and Ti. In a most preferred embodiment, the central atom is Si. In an embodiment, the central atom M is bonded to nitrogen atoms of the porphyrin and to other atoms or group of atoms noted X, X', such bonding is thus noted MXX' where M is as defined above and X and X' are monovalent groups and are independently selected from:

- an OR group where R represents H, alkyl, in particular C1-C6 alkyl, preferably H, methyl, ethyl;
- an halide, in particular fluorine, bromine, chlorine or iodine anion, preferably Cl- and Br-;
- an amine, in particular secondary amines- typically of formula $R^1R^2N$ with $R^1$ and $R^2$ independently selected from an alkyl, in particular a C1-C6 alkyl, provided that at least one of $R^1$ and $R^2$ is not H-, especially a dialkylamine, preferably dimethylamine.

In a preferred embodiment, X are X' are the same.

The porphyrin unit may be substituted or not, optionally mono- or polysubstituted with groups independently selected from an alkyl, an aryl or a halogen atom. $R_5$ and $R_6$ may be an identical or different radical selected from hydrogen, an alkyl group, in particular a C1-C5 alkyl group; an aryl group, in particular a C6 aryl group; an heteroaromatic group, such as pyridyl; an ether group of formula R-O-R', where each of R and R' is independently selected from an aryl group and an alkyl group, in particular from a C6 aryl group and a C1-C5 alkyl group, preferably an ether group with an aryl group and an alkyl group such as p-methoxyphenyl radical; an hydroxyalkyl group, an hydroxyaryl group such as hydroxyphenyl; an aryl halide, in particular a phenyl halide. In one embodiment, $R_6$ is selected from an alkyl group, an aryl group, an ether group, an hydroxyalkyl group, an hydroxyaryl group. In one embodiment, $R_5$=H and $R_6$=phenyl, hydroxyphenyl, p-methoxyphenyl, a phenyl halide or pyridyl.

A porphyrin monomeric unit (with or without peripheral substituents) is noted P, and a porphyrin monomeric unit having a central atom bonded is noted PM. Such notation includes the cases where M is bonded to other atoms or group of atoms X, X' as explained above.

In this first embodiment, the polysiloxane polymeric composition of the invention may present the general formula (4):

$$RO\text{-}[\text{-}SiR_1R_2O\text{-}]_x[Mc]_z\text{-}OR \qquad (4),$$

where $R_1$, $R_2$ and Mc have the same meaning as above, R is selected from hydrogen, a trialkylsilyl group, an alkenyldialkylsilyl group, an alkyldiarylsilyl group, an aryldialkylsilyl group and a triarylsilyl group, preferably hydrogen, and x and z are molar percents of corresponding monomeric units in the polymeric composition, with x from 90 to 99% and z from 1 to 10%.

A trialkylsilyl group can bear the same or different alkyl groups. Preferably, the trialkylsilyl group bears C1 to C6 alkyl groups, more preferably C1 to C4 alkyl groups. Examples for a trialkylsilyl group with the same alkyl groups are trimethylsilyl, triethylsilyl, tri-n-propylsilyl, tri-isopropylsilyl, tricyclohexylsilyl, preferably trimethylsilyl group. Examples for a trialkylsilyl group with different alkyl groups are dimethyl-tert-butylsilyl, dimethylcyclohexylsilyl, methyl-di-isopropylsilyl.

An alkenyldialkylsilyl group can bear the same or different alkyl groups. Preferably, alkenyl is ethenyl. The alkyl group may be any alkyl group having 1 to 6 carbon atoms, preferably 1 to 4 carbon atoms. Examples include alkenyldialkylsilyl-terminating groups such as ethenyldimethylsilyl, ethenyldiethylsilyl, allyldimethylsilyl and hexenyldimethylsilyl groups, preferably ethenyldimethylsilyl group.

As used herein, an "alkenyl" is understood as a "($C_2$-$C_6$) alkenyl", refers to a monovalent straight or branched unsaturated hydrocarbon chain containing from 2 to 6 carbon atoms and comprising at least one double bond including, but not limited to, ethenyl, propenyl, butenyl, pentenyl, hexenyl and the like.

An alkyldiarylsilyl group can bear the same or different aryl groups, preferably not substituted. Preferably, the alkyldiarylsilyl group bears a C1 to C6 alkyl group, more preferably a C1 to C4 alkyl group, and C5 to C6 aryl groups. Example of alkyldiarylsilyl group is methyldiphenylsilyl group.

An aryldialkylsilyl group can bear the same or different alkyl groups, the aryl group is preferably not substituted. Preferably, the aryldialkylsilyl group bears C1 to C6 alkyl groups, more preferably C1 to C4 alkyl groups, and a C5 to C6 aryl group. Example of aryldialkylsilyl group is phenyldimethylsilyl group.

A triarylsilyl group can bear the same or different aryl groups. Preferably, the aryl group is not substituted. Preferably, the trialkylsilyl group bears C5 to C6 aryl groups, preferably phenyl groups. An example is the triphenylsilyl group.

It should be noted that the macrocyclic monomeric unit may be bonded to the polymeric chain via a central atom M. It may however be envisaged to bond the macrocyclic monomeric unit to the polymeric chain via a peripherally positioned atom.

In a preferred embodiment, the polysiloxane polymeric composition may have the general formula (5):

$$RO\text{-}[\text{-}SiR_1R_2O^-]_x[McM]_z\text{-}OR \qquad (5),$$

where $R_1$, $R_2$, Mc and M have the same meaning as above, M being the central atom of the macrocycle, which atom is bonded to the polymer chain, R is selected from hydrogen, a trialkylsilyl group, an alkenyldialkylsilyl group, an alkyldiarylsilyl group, an aryldialkylsilyl group and a triarylsilyl group, preferably hydrogen, and x and z are molar percents of corresponding monomeric units in the polymeric composition, with x from 90 to 99% and z from 1 to 10%.

In particular, $R_1$, $R_2$, Mc and M may be as previously described.

In preferred embodiments, the polysiloxane polymeric composition of the invention may have one of the following formulae :

$$RO\text{-}[\text{-}SiCH_3PhO\text{-}]_x[McM]_z\text{-}OR \qquad (5.1),$$

where Ph is a phenyl group,

$$RO\text{-}[\text{-}SiCH_3CH_3O\text{-}]_x[McM]_z\text{-}OR \qquad (5.2),$$

$$RO\text{-}[\text{-}SiPh_2O\text{-}]_x[McM]_z\text{-}OR \qquad (5.3),$$

$$RO\text{-}[\text{-}SiCH_3PhO\text{-}]_x[PcM]_z\text{-}OR \qquad (5.4),$$

$$RO\text{-}[\text{-}SiCH_3CH_3O\text{-}]_x[PcM]_z\text{-}OR \qquad (5.5),$$

$$RO\text{-}[\text{-}SiPh_2O\text{-}]_x[PcM]_z\text{-}OR \qquad (5.6),$$

$$RO\text{-}[\text{-}SiCH_3PhO\text{-}]_x[PcSi]_z\text{-}OR \qquad (5.7),$$

$$RO\text{-}[\text{-}SiCH_3CH_3O\text{-}]_x[PcSi]_z\text{-}OR \qquad (5.8),$$

$$RO\text{-}[\text{-}SiPh_2O\text{-}]_x[PcSi]_z\text{-}OR \qquad (5.9),$$

$$RO\text{-}[\text{-}SiCH_3PhO\text{-}]_{x\text{-}a}[\text{-}SiPh_2O\text{-}]_{x\text{-}b}[McM]_z\text{-}OR \qquad (5.10),$$

where a+b=x,

$$RO\text{-}[\text{-}SiCH_3PhO\text{-}]_{x\text{-}a}[\text{-}SiPh_2O\text{-}]_{x\text{-}b}[McSi]_z\text{-}OR \qquad (5.11),$$

where a+b=x.

The ending group R of the polysiloxane polymeric composition of the invention may be hydrogen or a trialkylsilyl group or an alkenyldialkylsilyl or a triarylsilyl group or an alkyldiarylsilyl group or an aryldialkylsilyl group, for example in

which the alkyl is a C1-C4 alkyl preferably a methyl and the aryl is not substituted and is a C5-C6 aryl, preferably a phenyl. Preferably, the ending group R is hydrogen.

Polysiloxane polymeric composition comprising three monomeric units

In a second embodiment, the polysiloxane polymeric composition including a macrocyclic monomeric unit of the present invention has, and advantageously consists of,

- a siloxane monomeric unit of formula (1) [-$SiR_1R_2O$-], where $R_1$ and $R_2$ are the same or different and are each selected from an aryl, an alkenyl group and an alkyl group,

- a macrocyclic monomeric unit which is a macrocycle selected from a phthalocyanine and a porphyrin, in particular selected from the group consisting of a metallophthalocyanine, a metalloporphyrin, a metalloidphthalocyanine and a metalloidporphyrin, those molecules being substituted or not,

- a third monomeric unit of formula (6):

$$[-Si(CH_3)_2-Ar-Si(CH_3)_2-O-] \quad (6),$$

where Ar is selected from 1,4-disubstituted benzene, 4,4'-disubstituted 1,1'-biphenyl and 4,4'-disubstituted phenoxybenzene, and

In this polymeric composition, the molar percent of the siloxane monomeric unit is from 65 to 99%, the molar percent of the macrocyclic monomeric unit is from 0.1 to 5%, the molar percent of the third monomeric unit is from 1 to 35%.

Advantageously, in this polymeric composition, the molar ratio of the siloxane monomeric unit to the third monomeric unit is from 4.0:1.0 to 1.0:4.0, preferably 3:1.

In particular, the polysiloxane polymeric composition may comprise, or consist of, the three above mentioned monomeric units, these units being randomly distributed.

The above polysiloxane polymeric composition may include one monomeric unit or two or more different monomeric units of each type, in any combination.

In one embodiment, the above polysiloxane polymeric composition may include two different siloxane monomeric units of formula (1), one macrocyclic monomeric unit or two different macrocyclic monomeric units of the invention, and one third monomeric unit of formula (6) or two different third monomeric units of formula (6) although a single third monomeric unit of formula (6) is preferred.

The polymeric composition may have the general formula (7):

$$RO-[-SiR_1R_2O-]_x[-Si(CH_3)_2-Ar-Si(CH_3)_2-O-]_y[Mc]_z-OR \quad (7)$$

where $R_1$, $R_2$, Ar, Mc and R are as previously defined and described with respect to the first embodiment. In particular, all the preferred meaning of $R_1$, $R_2$, Ar, Mc and R described with respect to the first embodiment may be applied in the second embodiment.

In general formula (7), x, y, z are molar percents of the respective monomeric units in the polymeric composition, with x from 65 to 99%, y from 1 to 35 %, z from 0.1 to 5%. Advantageously, the ratio x:y may be from 4.0:1.0 to 1.0:4.0, preferably 3:1.

In a preferred embodiment, the polymeric composition of the invention may have the general formula (8):

$$RO-[-SiR_1R_2O-]_x[-Si(CH_3)_2-Ar-Si(CH_3)_2-O-]_y[McM]_z-OR \quad (8)$$

where:

$R_1$, $R_2$, Ar, Mc, M and R are as previously defined and described and x, y, z are molar percents of the respective monomeric units in the polymeric composition, with x from 65 to 99%, y from 1 to 35 %, z from 0.1 to 5%. Advantageously, the ratio x:y may be from 4.0:1.0 to 1.0:4.0, preferably 3:1.

In preferred embodiments, the siloxane monomeric unit and the macrocyclic monomeric unit may have the features previously described for the first embodiment, in particular the preferred ones.

In preferred embodiments, the polysiloxane polymeric composition may have one of the following formulae (the notations are the same as previously used):

RO-[-SiCH$_3$PhO-]$_x$[-Si(CH$_3$)$_2$-Ar-Si(CH$_3$)$_2$-O-]$_y$[McM]$_z$-OR (8.1),

where Ph is a phenyl group,

RO-[-SiCH$_3$CH$_3$O-]$_x$[-Si(CH$_3$)$_2$-Ar-Si(CH$_3$)$_2$-O-]$_y$[McM]$_z$-OR (8.2),

RO-[-SiPh$_2$O-]$_x$[-Si(CH$_3$)$_2$-Ar-Si(CH$_3$)$_2$-O-]$_y$[McM]$_z$-OR (8.3),

RO-[-SiCH$_3$PhO-]$_x$[-Si(CH$_3$)$_2$-Ar-Si(CH$_3$)$_2$-O-]$_y$[PcM]$_z$-OR (8.4),

RO-[-SiCH$_3$CH$_3$O-]$_x$[-Si(CH$_3$)$_2$-Ar-Si(CH$_3$)$_2$-O-]$_y$[PcM]$_z$-OR (8.5),

RO-[-SiPh$_2$O-]$_x$[-Si(CH$_3$)$_2$-Ar-Si(CH$_3$)$_2$-O-]$_y$[PcM]$_z$-OR (8.6),

RO-[-SiCH$_3$PhO-]$_x$[-Si(CH$_3$)$_2$-Ar-Si(CH$_3$)$_2$-O-]$_y$[PcSi]$_z$-OR (8.7),

RO-[-SiCH$_3$CH$_3$O-]$_x$[-Si(CH$_3$)$_2$-Ar-Si(CH$_3$)$_2$-O-]$_y$[PcSi]$_z$-OR (8.8),

RO-[-SiPh$_2$O-]$_x$[-Si(CH$_3$)$_2$-Ar-Si(CH$_3$)$_2$-O-]$_y$[PcSi]$_z$-OR (8.9),

RO-[-SiCH$_3$PhO-]$_{x-a}$[-SiPh$_2$O-]$_{x-b}$[-Si(CH$_3$)$_2$-Ar-Si(CH$_3$)$_2$-O-]$_y$[McM]$_z$-OR (8.10),

where a+b=x,

RO-[-SiCH$_3$PhO-]$_{x-a}$[-SiPh$_2$O-]$_{x-b}$[-Si(CH$_3$)$_2$-Ar-Si(CH$_3$)$_2$-O-]$_y$[McSi]$_z$-OR (8.11),

where a+b=x.

In the above formulae, R is preferably hydrogen or a trimethylsilylgroup or an alkenyldialkylsilyl group or an alkyldiarylsilyl group or an aryldialkylsilyl group or a triarylsylil group, for example in which the alkyl is a C1-C4 alkyl preferably a methyl and the aryl is not substituted and is a C5-C6 aryl, preferably a phenyl. Preferably, the ending group R is hydrogen.

Tables 2 and 3 give a selection of structures as examples of polymeric materials according to the invention. In table 2, the polymers have OH endings, whereas table 3 gives an example of polymeric material having trialkylsilyl group endings.

Table 2 : OH-terminated polymers

| Structure Name | Developed Structure | |
|---|---|---|
| **A** | 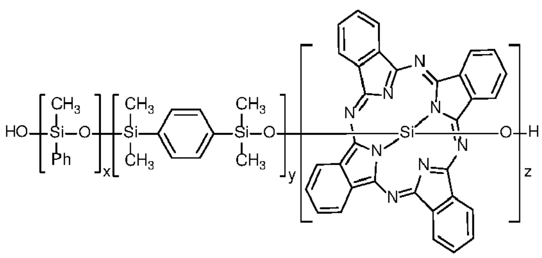 | First monomeric unit : R$_1$=CH$_3$, R$_2$ = phenyl<br>Second monomeric unit : unsubstituted silicon phthalocyanine<br>Third monomeric unit : [-Si(CH$_3$)$_2$-Ar-Si(CH$_3$)$_2$-O-] where Ar is 1,4-disubstituted benzene |

(continued)

| Structure Name | Developed Structure | |
|---|---|---|
| **B** | 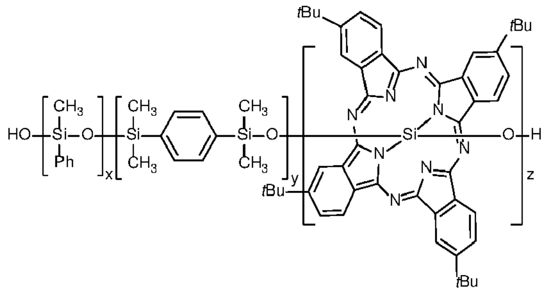 | First monomeric unit : $R_1$=$CH_3$, $R_2$ = phenyl Second monomeric unit : peripherally tetra substituted silicon phthalocyanine Third monomeric unit : [-Si($CH_3$)$_2$-Ar-Si($CH_3$)$_2$-O-] where Ar is 1,4-disubstituted benzene |
| **C** | 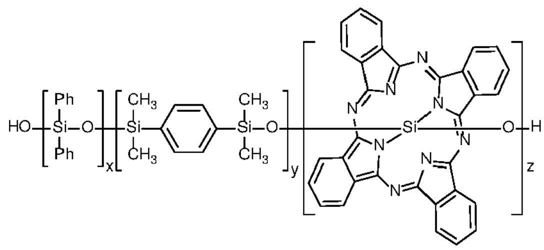 | First monomeric unit: $R_1$= $R_2$ = phenyl Second monomeric unit : unsubstituted silicon phthalocyanine Third monomeric unit : [-Si($CH_3$)$_2$-Ar-Si($CH_3$)$_2$-O-] where Ar is 1,4-disubstituted benzene |
| **D** | 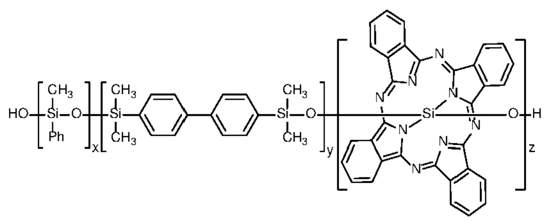 | First monomeric unit : $R_1$=$CH_3$, $R_2$ = phenyl Second monomeric unit : unsubstituted silicon phthalocyanine Third monomeric unit : [-Si($CH_3$)$_2$-Ar-Si($CH_3$)$_2$-O-] where Ar is 4,4' disubstituted 1,1'biphenyl |
| **E** | 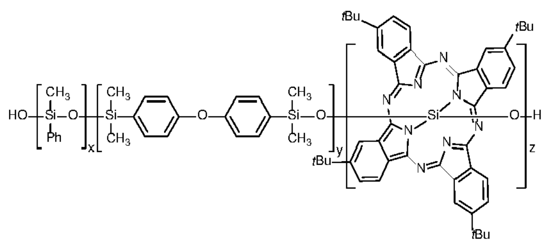 | First monomeric unit : $R_1$=$CH_3$, $R_2$ = phenyl Second monomeric unit : peripherally tetra substituted silicon phthalocyanine Third monomeric unit : [-Si($CH_3$)$_2$-Ar-Si($CH_3$)$_2$-O-] where Ar is 4,4' disubstituted phenoxybenzene |
| **F** | 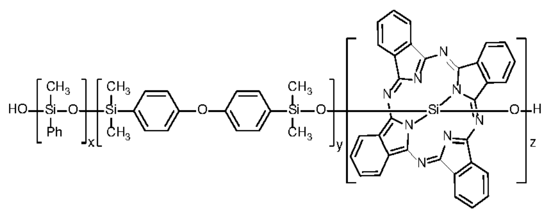 | First monomeric unit : $R_1$=$CH_3$, $R_2$ = phenyl Second monomeric unit : unsubstituted silicon phthalocyanine Third monomeric unit : [-Si($CH_3$)$_2$-Ar-Si($CH_3$)$_2$-O-] where Ar is 4,4' disubstituted phenoxybenzene |
| **G** | 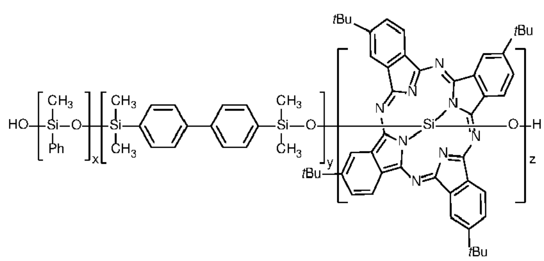 | First monomeric unit : $R_1$=$CH_3$, $R_2$ = phenyl Second monomeric unit : peripherally tetra substituted silicon phthalocyanine Third monomeric unit : [-Si($CH_3$)$_2$-Ar-Si($CH_3$)$_2$-O-] where Ar is 4,4' disubstituted 1,1'biphenyl |

(continued)

| Structure Name | Developed Structure | |
|---|---|---|
| **H** | 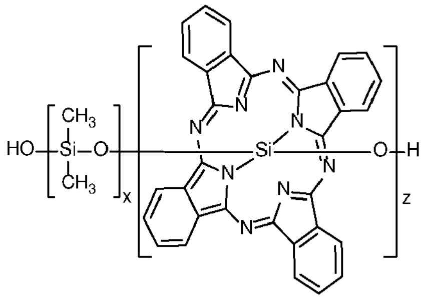 | First monomeric unit: $R_1$=$R_2$=$CH_3$ Second monomeric unit : unsubstituted silicon phthalocyanine |
| **I** | 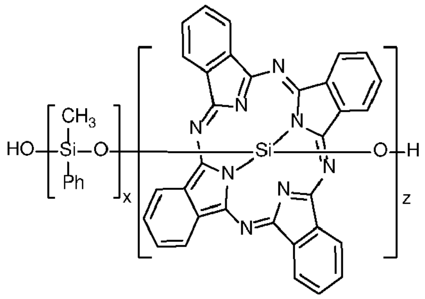 | First monomeric unit : $R_1$=$CH_3$, $R_2$= phenyl Second monomeric unit : unsubstituted silicon phthalocyanine |
| **J** | 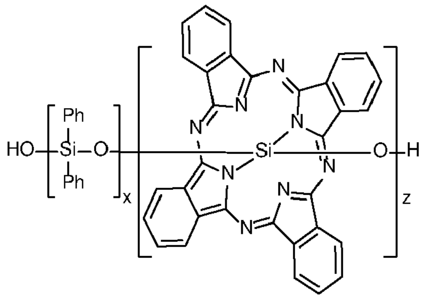 | First monomeric unit: $R_1$=$R_2$=phenyl Second monomeric unit : unsubstituted silicon phthalocyanine |

Table 3 : $OSiMe_3$-terminated polymers

| Structure Name | Developed Structure | |
|---|---|---|
| **K** | 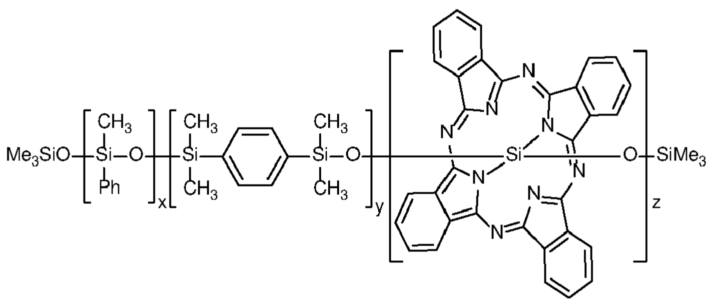 | Ending group : $SiMe_3$ where Me = $CH_3$<br>First monomeric unit : $R_1$= $R_2$ = phenyl<br>Second monomeric unit : unsubstituted silicon phthalocyanine<br>Third monomeric unit : [-Si $(CH_3)_2$-Ar-Si$(CH_3)_2$-O-] where Ar is 1,4-disubstituted benzene |

## Preparation of the polysiloxane polymeric compositions

The polysiloxane polymeric compositions of the invention can be obtained by a polymerisation reaction under acid or basic catalysis using precursors of the two or three monomeric units present in the polymers. These precursors

are usually alkoxides, in particular metal or metalloid alkoxides.

The polymeric compositions are generally prepared in a solvent in which the precursors are soluble. With regard to silicon alkoxides, particular mention may be made for the following solvents: the alcohols such as methanol, ethanol; the ethers such as diethylether and tetrahydrofuran; the chlorinated solvents such as chloroform, dichloromethane ($CH_2Cl_2$), dichloroethane ($C_2H_5Cl_2$) or other aprotic solvents such as $CH_3CN$ or diethylene dioxide.

In the presence of water, the hydrolysis of the alkoxide groups (-OR) occurs and these are converted to silanol groups (Si-OH) which are condensed forming siloxane groups (Si-O-Si). Small polymer chains are then formed. They aggregate and form vacancy clusters in suspension in the liquid: this is the sol. A gum is obtained by drying the sol. During this step, the residual, interstitial solvents escape from the formed polymeric network and evaporate, which causes contraction of the material. An end material is obtained whose volume is reduced compared with the volume taken up by the sol.

In one embodiment, the invention provides a process for preparing a polysiloxane polymeric composition according to the first embodiment of the invention, comprising the following successive steps:

(A) mixing at least one alkoxysilane of formula (9) $Si(OR_3)_2 R_1R_2$, where $R_1$ and $R_2$ are as previously defined and $R_3$ is an alkyl, an alkenyl or an aryl group, with a solvent and at least one macrocyclic molecule selected from the group consisting of a metallophthalocyanine, a metalloporphyrin, a metalloidphthalocyanine and a metalloidporphyrin and obtaining a first mixture, the proportions of the alkoxysilane and of the macrocyclic molecule being calculated to obtain a molar percent of a siloxane monomeric unit in the polymeric composition from 90 to 99% and a molar percent of the macrocyclic monomeric unit in the polymeric composition from 1 to 10%,

(B) adding to the first mixture of step (A) water and a catalyst selected from an acid or a base, and obtaining a second mixture containing a polysiloxane polymeric composition as defined in the first embodiment,

(C) evaporating the solvent and eliminating water and the catalyst from the second mixture to recover the polysiloxane polymeric composition as defined in the first embodiment.

Stirring may be provided in step (A) for better dissolution of the monomeric units into the solvents used. Step (A) is generally performed at room temperature, which generally corresponds to a temperature from 15 to 40°C.

The precursors of the macrocyclic monomeric unit may be a metallophthalocyanine, a metalloporphyrin, a metalloidphthalocyanine and a metalloidporphyrin. Preferably, in these precursors, the metal or the metalloid is a central atom bonded to the macrocycle and optionally also bonded to other atoms or group of atoms X and X' as defined above. The metal can be as previously mentioned a transition metal, the metalloid may be Si or Ti, preferably Si.

In the alkoxysilane of formula (9) $Si(OR_3)_2 R_1R_2$, $R_3$ is an alkyl, preferably a C1-C6 alkyl, most preferably a C1-C4 alkyl, or an alkenyl, preferably a C2-C6 alkenyl, most preferably an ethenyl, or an aryl, preferably a phenyl.

Step (B) is therefore a polymerisation step during which the above precursors are polymerised.

When the terminating group of the polysiloxane polymeric composition of the invention is different from OH, during step (B) an end-capping agent is added to the first mixture of step (A). The end capping-agent is generally added in a solvent, for example a chlorinated solvent such as chloroform and dichloromethane, and mixtures thereof.

The end-capping agent contains the terminating group to incorporate at the ends of the polymer chains. The end-capping agent may be a silyl compound containing a group chosen from a trialkylsilyl group, an alkenyldialkylsilyl group, an alkyldiarylsilyl group, an aryldialkylsilyl group and a triarylsilyl group.

The end-capping agent may be a silyl halide, for example chosen from a trialkylsilyl halide, an alkenyldialkylsilyl halide, an alkyldiarylsilyl halide, an aryldialkylsilyl halide and a triarylsilyl halide. The halide is in particular fluorine, bromine, chlorine or iodine anion, preferably Cl- or Br-.

Step (B) of polymerisation may preferably include, or consist of, three to four successive phases:

- a first phase in which the solution formed by addition of water and the catalyst to the first mixture of step (A) is stirred for at least 20 hours, preferably at room temperature, in particular from 20 to 48 hours, preferably from 20 to 36 hours,

- a second phase during which the stirred solution is partially evaporated to eliminate at least 50% of the volume of the solution to form a concentrated solution,

- a third stage during which the concentrated solution is not stirred and allowed to stand at room temperature for at least 20 hours, in particular from 20 to 36 hours,

- an optional fourth stage during which an end-capping agent containing a terminating group chosen from a trialkylsilyl group, an alkenyldialkylsilyl group, an alkyldiarylsilyl group, an aryldialkylsilyl group and a triarylsilyl group, in particular in a solvent, is added to the solution of the third stage.

In particular, the second phase is performed under conditions allowing evaporation of the solvent without evaporating the catalyst. The appropriate conditions can be determined by checking the presence of catalyst by any appropriate analytic analysis.

The fourth stage includes addition of an end-capping agent as defined above, optionally in a solvent, preferably under stirring at room temperature for at least 30 minutes, typically from 30 to 90 minutes, generally from 30 to 60 minutes.

At the end of the third stage, which is a growth step, or at the end of the fourth stage, the second mixture containing the polysiloxane polymeric composition of the invention is obtained. The catalyst added to the mixture during step (B) may be an acid or a mixture of acids, for example selected from the group consisting of an organic acid, an inorganic acid and an anhydride acid. In preferred embodiments, the acid is trifluoroacetic acid. Such acid is used as a catalyst: the man skilled in the art knows how to determine the amount of acid to add to perform the polymerisation.

Alternatively, the polymerisation reaction could be performed in basic catalysis. The catalyst added to the mixture during step (B) is then a base or a mixture of bases, for example selected from the group consisting of alkali hydroxides, earth alkali hydroxides and amines. Examples of base are NaOH, KOH, $Ba(OH)_2$, ammonium hydroxyde, tetramethylammonium hydroxide, triethylamine, tributylamine, diisopropylethylamine, pyridine, 4-dimethylaminopyridine, etc.

Preferably, the polymerisation is performed under acid catalysis.

The solvent used in step (A) is selected from the group consisting of an alcohol such as methanol, ethanol, propanol or butanol, a chlorinated solvent such as chloroform and dichloromethane, and mixtures thereof. In a preferred embodiment, dicholoromethane is used.

The second mixture containing the polymeric compound obtained at the end of step (B) is then submitted to the evaporation step (C) to evaporate water, solvents and the catalyst. A material forming a polysiloxane polymeric composition according to the invention is then recovered at the end of the evaporation step (C).

Step (C) may be performed at a temperature and duration sufficient to evaporate the solvent, the water and the catalyst, optionally under vacuum. Such conditions can be determined by checking the presence of these components by analysis or until constant weight. By way of example, the temperature used may range from ambient temperature to 60C°, generally at least during 6 hours.

In another embodiment, the invention provides a process for preparing a polysiloxane polymeric composition according to the second embodiment of the invention, comprising the following successive steps :

(A1) mixing at least one alkoxysilane of formula (9) $Si(OR_3)_2 R_1R_2$, where $R_1$ and $R_2$ are as previously defined and $R_3$ is an alkyl, an alkenyl or an aryl group, with a solvent and at least one macrocyclic molecule selected from the group consisting of a metallophthalocyanine, a metalloporphyrin, a metalloidphthalocyanine and a metalloidporphyrin and obtaining a premix, the proportions of the alkoxysilane and of the macrocyclic molecule being calculated to obtain a molar percent of a siloxane monomeric unit in the polymeric composition from 65 to 99% and a molar percent of macrocyclic monomeric unit of 0.1 to 5%,

(A2) adding to the premix of step (A1) at least one silanol of formula (10) $R''-Si(CH_3)_2-Ar-Si(CH_3)_2-R'''$, where R" and R'" are the same or different and are each selected from an halogen, an amine group, an hydroxyl group or an alkoxy group and where Ar is selected from 1,4- disubstituted benzene, 4,4'- disubstituted 1,1'- biphenyl and 4,4'-disubstituted phenoxybenzene, optionally previously dissolved in a second solvent and obtaining a first mixture, the proportion of silanol being calculated to obtain a molar percent of the $[-Si(CH_3)_2-Ar-Si(CH_3)_2-O-]$ unit in the polymeric composition from 1 to 35%,

(B) adding to the first mixture of step (A2) water and a catalyst selected from an acid or a base, and obtaining a second mixture containing a polysiloxane polymeric composition as defined with respect to the second embodiment,

(C) evaporating the solvent and eliminating water and the catalyst from the second mixture to recover the polysiloxane polymeric composition as defined with respect to the second embodiment.

This process only differs from the first embodiment by step (A2), step (A1) being similar to step (A) previously described and may be performed as step (A).

Thus, stirring may be provided in steps (A1) and (A2) for better dissolution of the monomeric units into the solvents used. Steps (A1), (A2) are generally performed at room temperature, which generally corresponds to a temperature from 15 to 40°C.

The solvent used in step (A1) is selected from the group consisting of an alcohol such as methanol, ethanol, propanol or butanol, a chlorinated solvent such as chloroform and dichloromethane, and mixtures thereof. In a preferred

embodiment, dicholoromethane is used.

The solvent used in step (A2) may be an ether, for example tetrahydrofuran or diethylether, preferably tetrahydrofuran.

In Step (A2), R" and R'" are each selected from :

- an halogen,
- an amine group, in particular secondary amines- typically of formula $R^1R^2N$ with $R^1$ and $R^2$ independently selected from an alkyl, in particular a C1-C6 alkyl, provided that at least one of $R^1$ and $R^2$ is not H-, especially a dialkylamine, preferably dimethylamine,
- an hydroxyl group,
- an alkoxy group, typically of formula -OR where R is alkyl, preferably a C1-C6 alkyl, most preferably a C1-C4 alkyl, especially methoxy or ethoxy groups.

In one embodiment, R" and R'" are the same.

Steps (B) and (C) may be performed as described in the previous embodiment.

In both embodiments, step (C) may be followed by an optional filtration step (D) in which the polymeric composition recovered in step (C) is dissolved in a solvent and filtrated to remove eventual insoluble particles. The filtrate is then resubmitted to evaporation to remove the solvent, and recover a polymeric composition. By way of example, the solvent may be a 1:1 mixture of dichloromethane and pentane. The filtration may be performed on a filter, preferably a PTFE filter with a mesh retaining particles over 0.2μm. The evaporation may be performed at a temperature sufficient to evaporate the solvent, for example 30°C, optionally under vacuum.

**Polysiloxane polymeric compositions as stationary phases**

The polysiloxane polymeric compositions of the present invention can be used as a stationary phase in a capillary column for gas chromatography analysis, in particular high-temperature gas chromatography.

To this effect, a film of the polysiloxane polymeric compositions of the present invention can be coated on the internal surface of a capillary column, in particular a silica capillary and preferably a fused silica capillary, or a glass capillary column or even a capillary column made of stainless steel.

The coating of the film can be performed by known methods, for example by a static coating method, by dissolving the polysiloxane polymeric composition of the invention in a solvent, filling the capillary tube with the solution and evaporating the solvent.

The solvent used to prepare the polysiloxane polymer solution must solubilize completely the polymer and be easy to evaporate in order to facilitate the coating process. The solvents may be dichloromethane, diethyl ether, pentane, acetone, tetrahydrofuran or a mixture of two of these solvents, preferably a 1:1 mixture of dichloromethane and pentane. The solution may be filtered before its introduction into the capillary tube, for example through a 0.2 μm PTFE syringe filter.

The evaporation may be performed under vacuum, at a temperature sufficient to evaporate the solvent, for example 30°C. Such evaporation can be performed by closing one end of the capillary tube and connecting the other end at a vacuum pump system.

Upon evaporation, the capillary columns have theoretical film thickness of stationary phase, for example from 0.05 μm to 1.0 μm.

The theoretical film thickness ($e_f$) can be calculated using the equation

$$e_f = (d_c \times C)/(4 \times \rho) \text{ (equation 1)}$$

The internal diameter of the capillary tubing (in millimeters) is defined as $d_c$, ρ is the density (which is supposed to be equal to 1000 g $L^{-1}$) and C is the g $L^{-1}$ concentration of polysiloxane polymeric composition in the coating solution.

After evaporation, the coated capillary column may be purged with nitrogen gas or any other appropriate gas to remove any traces of solvent.

After evaporation of the solvent and optional purge, the stationary phase in the capillary column can be submitted to an aging step, at a temperature from 260 to 400°C, preferably from 280°C to 390°C for several hours, for example for 4-12 hours, preferably under an inert gas flow such as helium. In particular, two or three successive aging steps may be provided, for example a first one at a first temperature from 260°C to 300°C for 4-12 hours and a second one at a second temperature from 370 to 400°C for 4-12 hours and optionally a third one at the same temperature as the second temperature for 4-10 hours. By way of example, a aging may include heating under helium at 280°C for 6 hours, followed by heating at 390°C each for 12 hours.

The capillary tube may be made of silica, in particular of fused silica. The internal surface of the capillary tube

may be untreated or may be submitted to a treatment before coating the film of polysiloxane polymeric composition of the invention. This treatment can be a chosen among a lixiviation treatment, a deactivation treatment, or a succession of a lixiviation treatment and a deactivation treatment. The lixiviation treatment may be an acid treatment followed by a dehydration step to obtain an internal surface containing silanols (Si-OH). By way of example the lixiviation may be performed by addition of a solution of 2%HCl (v/v), heating at a temperature from 200 to 240°C for 4-10 hours and a dehydration at 230-270°C. The deactivation step may be a treatment during which the internal surface is modified with a deactivating agent such as DPTMDS (1,3-diphenyl-1,1,3,3-tetramethyldisilazane), HMDS (hexamethyldisilazane), and then heated at 320-400°C for 4-10 hours. Other silylating agents for the deactivating step can be envisaged.

The following examples serve to merely illustrate the invention and should not be construed as limiting its scope in any way. While the invention has been shown in only some of its forms, it should be apparent to those skilled in the art that it is not so limited, but is susceptible to various changes and modifications without departing from the scope of the invention.

## EXAMPLES

### Synthesis of phthalocyanine terpolymers bv polymerisation reaction in acid catalysis

A typical reaction synthesis is depicted in the scheme represented in figure 1 to obtain the general structure represented figure 2.

The synthesis is performed as described hereafter. Methylphenyl(diethoxy)silane and silicon phthalocyanine dihydroxide are mixed in dichloromethane. Then 1,4-bis(hydroxydimethylsilyl)benzene dissolved in tetrahydrofuran is added. To this mixture are added trifluoroacetic acid and water, and the reaction mixture is stirred for 24h at 25°C. Then, the reaction mixture is rested for another 24h at room temperature before evaporation of volatiles. The material obtained is taken up in dichloromethane and pentane (1:1) and filtered to remove the eventual insoluble particles. The solvent is evaporated and the polymer obtained is used without further purification. Using this method, the obtained polymer will display a random composition.

All of the phthalocyanine-polysiloxane polymers of the invention that were prepared and used to coat capillary columns have the following composition. The molar ratios between x and y were of about 75:25 and the z was added in 0.25-0.5 molar percent. Polymers with unsubstituted phthalocyanine and tetra-*tert*-butyl phthalocyanine were prepared. Most of the polymers used to coat capillary columns were hydroxyl-terminated in order to promote silica-bonding and cross-bonding of the polymer chains. The new phthalocyanine-polysiloxane phases were found to be useful for gas chromatography separation of different classes of compounds. The use of tetra-*tert*-butyl phthalocyanine improves the efficiency of the stationary phase compared with the non-substituted phthalocyanine.

### Instrumentation

The gas chromatographic analyses were carried out on Thermo Fisher Scientific Trace GC Ultra gas chromatograph equipped with a FID (flame ionization detector) and a split/splitless injector. The chromatograms were processed and stored with the Thermo Chrom-Card software (version 2.4.1). All analyses were conducted with helium as carrier gas.

Inverse GC analyses were performed on a Hewlett-Packard 6890 N. Injector temperature was 300°C, FID detector temperature was 350°C and carrier flow 0.8 mL/min (Helium).

TGA was performed using a Netzsch TG 209 apparatus. The baseline was calibrated from 30 to 550 °C with a heating rate of 10 °C $min^{-1}$. Approximately 10 mg of polymer was placed into a ceramic crucible. A nitrogen flow of 15 mL $min^{-1}$ was applied during the measurements. The data processing was performed with Netzsch-TA Proteus® software (version 4.8.4).

### Test methods

The properties cited below were determined in accordance with the following test procedures. Where any of these properties is referenced in the appended claims, it is to be measured in accordance with the specified test procedure.

**Determination of Kovats retention indices, Rohrschneider-McReynolds constants and Polarity**

In order to estimate the polarity of the GC stationary phases, the system developed by Rohrschneider and McReynolds was used. The method is based on the retention of the first five probe molecules (benzene, n-butanol, 2-pentanone, nitropropane and pyridine). Initially, a qualitative retention time index mixture containing $C_7$-$C_{10}$ was used to determine the Kovats retention indices. The Kovats retention indices of the five solutes were determined at 40°C and an average He velocity of 25 cm/s for a GC stationary phase to characterize which coats a capillary column. Next, the

Rohrschneider-McReynolds constants are obtained by subtracting from the previously determined Kovats retention indices, the retention Kovats indices obtained on a squalene apolar column. The overall polarity is the sum of the five Rohrschneider-McReynolds constants and the Polarity number (PN) is calculated as:

$$PN = \left(\frac{P}{P_{SLB-IL100}}\right) \times 100 \quad \text{(equation 2)}$$

Where P is the overall polarity of the stationary phase to be evaluated and $P_{SLB-IL100}$ is the overall polarity of the commercial column SLB®-IL100.

**Separation performance of the Grob test Mixture**

The inertness of the chromatographic system can be estimated using the Grob test mixture. The Grob test can provide quantitative information about four important aspects of column quality: separation efficiency, adsorptive activity, acidity/basicity and the stationary phase film thickness. Grob's mix was used in order to estimate the order of elution of polar and non-polar analytes. The Grob's mix contains 12 analytes: decane, undecane, methyl decanoate, methyl undecanoate, methyl laurate, D(-)-2,3-butanediol, dicyclohexylamine, 2,6-dimethylaniline, 2,6-dimethylphenol, 2-ethylhexanoic acid, nonanal, 1-octanol.

**EXPERIMENTAL**

**General preparation method for phthalocyanine terpolymers**

Into a headspace vial are placed methylphenyl(diethoxy)silane, silicon phthalocyanine dihydroxide and dichloromethane. The mixture was stirred, then ultrasounded for 5 minutes. Separately, 1,4-bis(hydroxydimethylsilyl)benzene is dissolved into tetrahydrofuran, then added to the solution above. Next, to the mixture is added trifluoroacetic acid and water. The vial is sealed and the reaction mixture is stirred for 24h at 25°C. Then, the majority of the solvent (at least 50% by volume) is slowly evaporated and the reaction is left without agitation for another 24h at room temperature.

For the synthesis of Polymer 6, at this stage is added trimethylchlorosilane diluted into 1.0 mL dichloromethane. The mixture obtained is stirred at room temperature for minimum 30 min.

The mixture obtained is evaporated under vacuum to remove the rest of the solvent and acid and water, and unreacted trimethylchlorosilane. The residue obtained is taken in 15mL of 1:1 mixture of dichloromethane and pentane, stirred to homogenize the solution and filtrated through a 0.2μm PTFE filter. The solvent is evaporated and the polymer obtained is fully dried under vacuum for 12h to give a blue polymer material.

**EXAMPLE 1**

Preparation of hydroxy-terminated **Polymer 1** of structure name A, table 2, where x=75%-mol, y = 24.75-mol and z=0.25%-mol.

Reagents: 0.555g (2.64 mmol) methylphenyl(diethoxy)silane, 5.05mg (8.79 μmol) silicon phthalocyanine dihydroxide and 3 mL dichloromethane; 0.200g (0.879 mmol) of 1,4-bis(hydroxydimethylsilyl)benzene and 1 mL tetrahydrofuran; 100 μL trifluoroacetic acid and 5 μL water. Yield 0.56 g of polymer.

UV-Vis $\lambda_{max}$ (nm, $CH_2Cl_2$) (%): 672 (19), 605 (3), 355 (40), 270 (11), 264 (12), 230 (100).

IR ($cm^{-1}$, neat) : 3069.7 ($CH_{aromatic}$), 3048.6 ($CH_{aromatic}$), 2957.7 ($CH_{aliphatic}$), 1591.7, 1428.4, 1380.2, 1256.8 ($CH_3$-Si-$CH_3$), 1136.7 (Si-$C_6H_4$-Si), 1122.4, 1014.3, 996.4, 820.4, 773.1, 726.2 ($CH_3$-Si-$C_6H_5$), 695.76 ($CH_3$-Si- $C_6H_5$), 504.2, 475.8, 425.0.

**EXAMPLE 2**

Preparation of hydroxy-terminated **Polymer 2** of structure name A, table 2, where x=75%-mol, y = 24.5-mol and z=0. 5%-mol.

Reagents: 0.55 g (2.61 mmol) methylphenyl(diethoxy)silane, 10mg (17.4 μmol) silicon phthalocyanine dihydroxide and 3 mL dichloromethane; 0.193g (0.853 mmol) of 1,4-bis(hydroxydimethylsilyl)benzene and 1 mL tetrahydrofuran; 100 μL trifluoroacetic acid and 5 μL water. Yield 0.54 g of polymer.

UV-Vis $\lambda_{max}$ (nm, $CH_2Cl_2$) (%): 672 (36), 605 (5), 355 (8), 264 (12), 230 (100).

IR ($cm^{-1}$, neat): 3069.6 ($CH_{aromatic}$), 3048.5 ($CH_{aromatic}$), 2957.5 ($CH_{aliphatic}$), 1591.7, 1428.4, 1380.2, 1256.8 ($CH_3$-Si-$CH_3$), 1136.7 (Si-$C_6H_4$-Si), 1122.3, 1014.9, 996.6, 820.2, 773.2, 726.2 (Si-$C_6H_4$-Si), 695.8 (Si-$C_6H_4$-Si), 504.2,

476.4, 420.8.

**EXAMPLE 3**

Preparation of hydroxy-terminated **Polymer 3** of structure name A, table 2, where x=75%-mol, y = 24.0-mol and z=1.0 %-mol.

Reagents: 0.55 g (2.61 mmol) methylphenyl(diethoxy)silane, 20mg (34.8 μmol) silicon phthalocyanine dihydroxide and 3 mL dichloromethane; 0.190g (0.853 mmol) of 1,4-bis(hydroxydimethylsilyl)benzene and 1 mL tetrahydrofuran; 100 μL trifluoroacetic acid and 5 μL water. Yield 0.54 g of polymer.

IR ($cm^{-1}$, neat): 3069.6 ($CH_{aromatic}$), 3048.5 ($CH_{aromatic}$), 2957.5 ($CH_{aliphatic}$), 1591.7, 1428.4, 1380.2, 1256.8 ($CH_3$-Si-$CH_3$), 1136.7 (Si-$C_6H_4$-Si), 1122.3, 1014.9, 996.6, 820.2, 773.2, 726.2 (Si-$C_6H_4$-Si), 695.8 (Si-$C_6H_4$-Si), 504.2, 476.4, 420.8.

**EXAMPLE 4**

Preparation of hydroxy-terminated **Polymer 5** of structure name B, table 2, where x=75%-mol, y = 24.5-mol and z=0.5 %-mol.

Reagents: 0.545 g (2.59 mmol) methylphenyl(diethoxy)silane, 13.8mg (17.3 μmol) silicon 2,9,16,23-tetra-*tert*-butyl-29*H*,31*H*-phthalocyanine dihydroxide and 3 mL dichloromethane; 0.193g (0.846 mmol) of 1,4-bis(hydroxydimethylsilyl)benzene and 1 mL tetrahydrofuran; 100 μL trifluoroacetic acid and 5 μL water. Yield 0.52 g of polymer.

IR ($cm^{-1}$, neat): 3069.6 ($CH_{aromatic}$), 3048.6 ($CH_{aromatic}$), 2957.4 ($CH_{aliphatic}$), 1591.6, 1428.3, 1380.2, 1256.9 ($CH_3$-Si-$CH_3$), 1136.5 (Si-PhI-Si), 1122.4, 1014.1, 996.5, 820.4, 773.2, 725.9 (Si-$C_6H_4$-Si), 695.6 (Si-$C_6H_4$-Si), 504.2, 476.2, 431.6, 416.7.

**EXAMPLE 5**

Preparation of $OSiMe_3$-terminated **Polymer 6** of structure name K, table 3, where x=75%-mol, y = 24.75-mol and z=0.25 %-mol.

Reagents: 0.545 g (2.59 mmol) methylphenyl(diethoxy)silane, 13.8mg (17.3 μmol) silicon 2,9,16,23-tetra-*tert*-butyl-29*H*,31*H*-phthalocyanine dihydroxide and 3 mL dichloromethane; 0.193g (0.846 mmol) of 1,4-bis(hydroxydimethylsilyl)benzene and 1 mL tetrahydrofuran; 100 μL trifluoroacetic acid and 5 μL water. 150 μL trimethylchlorosilane and 1.0 mL dichloromethane. Yield 0.54 g of polymer.

IR ($cm^{-1}$, neat) : 3069.7 ($CH_{aromatic}$), 3048.8 ($CH_{aromatic}$), 3002.6 ($CH_{aliphatic}$), 2957.5 ($CH_{aliphatic}$), 2900.1 ($CH_{aliphatic}$), 1591.7, 1488.5, 1428.4, 1407.2, 1380.1, 1334.3, 1256.8 ($CH_3$-Si-$CH_3$), 1136.6 (Si-PhI-Si), 1122.4, 1027.0, 1014.5, 912.3, 996.6, 820.5, 773.2, 725.8 (Si-$C_6H_4$-Si), 695.6 (Si-$C_6H_4$-Si), 618.7, 555.4, 504.2, 476.5, 424.4, 416.7.

**EXAMPLE 6** - **Thermal stability of the polymeric compositions** - **TGA Analyses**

The thermal stability of the polymer materials of the invention was characterized by thermogravimetric analysis in controlled atmosphere. The analyses were performed in a nitrogen atmosphere and heated with ramp of 10 °C/min from room temperature to 550 °C. The decomposition temperature was determined at 5% and 10% weight loss. The 5% weight loss corresponding to 95% w value was considered as a measure of thermal stability. The TGA thermal curves of the hydroxy-terminated polysiloxanes copolymers (Polymers 1, 2, 3, 5 and 6) represented figure 3 indicate a weight loss of 5% between 337-378°C and a weight loss of 10% between 404-466°C. In the table 4 are presented the temperatures of decomposition at 5 and 10% of weight loss for each polymer composition, where 95%w refers to 5% mass decrease of sample, 90%w indicates 10% mass loss of sample. From the presented data, it is evident that the polymers present high thermal stability withstanding elevated temperatures up to 400°C with minimal to low decomposition. Significant decomposition occurs over 500°C.

Table 4

| | **Thermal stability (°C)** | |
|---|---|---|
| | **95%w** | **90%w** |
| Polymer 1 | 344 | 410 |
| Polymer 2 | 337 | 404 |
| Polymer 3 | 378 | 466 |

(continued)

| | Thermal stability (°C) | |
|---|---|---|
| | **95%w** | **90%w** |
| Polymer 5 | 366 | 442 |
| Polymer 6 | 365 | 424 |

## Preparation of columns

The Polymers 1, 2 and 5 of Examples 1, 2 and 4 were applied as stationary phases in gas-liquid chromatographic columns. The columns may have the following characteristics: they may be about 5-60 meters long and with an internal diameter about 50-500 micrometers and coated with polymer film with thickness of about 0.05-1.0 micrometer. In the example 7 presented here, typically a fused silica capillary column of about 10 meters long and about 0.25 millimeters in inner diameter (i.d.) was statically coated with about 0.25 μm polymer film unless otherwise stated. The fused silica may be untreated or deactivated with 1,3-diphenyltetramethyldisilazane.

The fused silica capillaries were prepared in the following manner. First, to prepare the untreated fused silica, the capillaries were rinsed with 1mL methanol, then 1mL dichloromethane, then purged with dry nitrogen gas for at least 2 hours. The deactivated fused silica capillaries can be purchased or prepared as follows. After a preliminary step of rinsing and drying as mentioned above, the fused silica capillaries were treated with 2% HCl solution at 220°C for 6h. Then, rinsed subsequently with 2% HCl solution, 1 mL of methanol and purged with dry nitrogen at 250°C for about 2 hours. Next, the capillary was 5% filled with DPTMDS and heated at 330°c for 6 hours. Then, rinsed subsequently with 1 mL of methanol, 1mL of diethyl ether, and purged with dry nitrogen for at least 2 hours.

The phthalocyanine-polysiloxane polymer is dissolved in 4 mL of solvent mixture (dichloromethane/pentane ratio 1/1) at a sufficient concentration (0.4 % (w/v)) to deliver a film thickness of about 0.25 μm by the static coating method. Prior to filling the capillary, the polymer solution is filtered through a 0.2 μm PTFE syringe filter. The capillary was filled-up with the polymer solution and after closing one side, the solvent was evaporated at 30°C by connecting the other end to a vacuum pump system. The capillary columns are coated with the polymer and purged with nitrogen gas to remove traces of solvent before the conditioning step. After the coating step, columns were conditioned under a constant flow of 0.4 ml/min of helium at 280°C for 6h, then at 390°C for 12h.

**EXAMPLE 7 - Efficiency and polarity of the obtained phthalocyanine stationary phases**

The experimentally measured efficiency of three of the invention stationary phases and as well of two commercial phase columns are presented in table 5.

ZB-XLB-HT is a capillary column working in the temperature range of 30 to 400°C and presenting a polarity PN of 9.

ZB-35HT is a capillary column working in the temperature range of 40 to 400°C and presenting a polarity PN of 18.

The efficiency of the columns was estimated using tetradecane (C14) injections at 130°C. The operating conditions were: 10m x 0.25 mm i.d. fused silica capillary column, isothermal 130°C, helium carrier gas flow rate 0.8 ml $min^{-1}$, FID (flame ionization detector) 250°C, injector 250°C, split injection (1:30).

The presented data show that the stationary phases are very efficient. The columns showed efficiency ranging from 2300 to 2900 plates $m^{-1}$ and higher than the commercials one when tested under the above-mentioned conditions.

Table 5

| Stationary phase | **Polymer 1** | **Polymer 2** | **Polymer 5** | **ZB-XLB-HT** | **ZB-35HT** |
|---|---|---|---|---|---|
| Column efficiency (plates $m^{-1}$) | 2500 | 2300 | 2900 | 1700 | 2000 |
| PN | 19 | 21 | 19 | 9 | 18 |

Column efficiency is expressed by the number of theoretical plates (N) determined by the following formula:

$$N = 16 \cdot (t_R/W_b)^2 \text{ (equation 3)}$$

where $t_R$ refers to the retention time of the peak measured from instant of injection, $W_b$ refers to the peak width at baseline

and $W_h$ tot he peak width at its half-height.

The polarity of the phthalocyanine-polysiloxane stationary phases was estimated by using the Rorhscheider-McReynolds method. The tested stationary phases of the invention present a polarity in the range of intermediate polarity (P.N. 10-32). The operating conditions were: 10m x 0.25 mm i.d. fused silica capillary column, isothermal 40°C, helium carrier gas flow rate 0.8 ml $min^{-1}$, FID 250°C, injector 250°C, split injection (1:30).

**Performance testing of phthalocyanine stationary phases**

**EXAMPLE 8- Inverse GC Analysis**

The thermal behavior of the **Polymer 1** as a stationary phase was also evaluated by inverse GC and compared with the ultra-low bleed commercial column ZB-35HT from Phenomenex®. The columns were new, never used, prior to this testing. The commercial column was purchased directly from the original manufacturer and conditioned as recommended by manufacturer before testing. The operating conditions were: 10m x 0.25 mm i.d. capillary column coated with a 0.1 μm polymer film, temperature program from 40°C (hold 60 min) at 1°C $min^{-1}$ to 380°C (hold 3h), to 400°C (hold 3h), to 420°C (hold 1h), helium carrier gas, flow rate 0.8 ml $min^{-1}$, FID at 350°C. Both columns presented very low bleed with a drift of the baseline inferior to 20 picoAmpere. The thermal stability diagram acquired from GC-FID is represented figure 4. The phthalocyanine-polysiloxane stationary phase **(polymer 1)** exhibits a baseline drift profile at 420°C that is less prone to rise, therefore more stable.

**EXAMPLE 9- Thermal stability**

The stability of the new phthalocyanine-polysiloxane stationary phase at high temperature was evaluated by repeated injections of a mixture of n-alkanes (C7-C40). Three series of 50 consecutive injections were performed. The behavior of a column coated with **Polymer 1** (10m x 0.25 mm i.d. x 0.25μm) was compared to Column ZB-35HT Phenomenex® (10m x 0.25 mm i.d. x 0.1μm) and Column ZB-XLB-HT Phenomenex® (10m x 0.25 mm i.d. x 0.1μm). All columns were new and never used prior to this testing. The operating conditions for the first series of repeatability were: 10m x 0.25 mm i.d. fused silica capillary column, temperature program from 40°C (hold 3 min) at 7°C $min^{-1}$ to 390°C and hold for 2 min, helium carrier gas, FID, split injection (1:50). The loss of the retention time was calculated after 50 injections for the C40 peak as the difference between the retention time of the first injection and the retention time of the fiftieth injection. The loss of the retention time was also calculated in the same manner when heating up to 400°C (hold 2 min) and 420°C (hold 2min) respectively. The 150 analyses of the three series were all consecutives.

In all three series of repeatability the column coated with **Polymer 1** presented the lowest loss of the retention time. Thus, column coated with **Polymer 1** lost in retention 4.2 seconds after 50 injections when heated up to 390°C, 5.9 seconds when heated up to 400°C and 9.2 seconds when heated up to 420°C. The columns ZB-35HT and ZB-XLB-HT have a maximum allowable operating temperature (MAOT) recommended by the manufacturer of 400°C. The column ZB-35HT exhibited high stability when heated to 390°C and 400°C, but when heating over the MAOT at 420°C the lost in retention time was significantly higher (27.2 sec). The column ZB-XLB-HT exhibited the highest lost in retention time at all three temperatures.

Table 6 Retention time stability following long-term and high-temperature use for a mixture of hydrocarbon mixture (C7-40)

| | Retention time Δt (sec) | | |
|---|---|---|---|
| | series 1[a] | series 2[b] | series 3[c] |
| Polymer 1 | 4.2 | 5.9 | 9.2 |
| ZB-35HT | 6.0 | 8.2 | 27.2 |
| ZB-XLB-HT | 13.7 | 19.0 | 29.6 |

a) Series 1: Oven temperature was set at 40 °C and ramped up to 390 °C by rate of 7 °C/min.
b) Series 2: Oven temperature was set at 40 °C and ramped up to 400 °C by rate of 7 °C/min.
c) Series 3: Oven temperature was set at 40 °C and ramped up to 420 °C by rate of 7 °C/min. Helium was used as carrier gas at 0.8 mL/min.

**EXAMPLE 10- Separation performance of the Grob's mix**

The new phthalocyanine-polysilixane stationary phases showed very good separation ability for a mixture of both polar and apolar analytes. Figure 5 shows the separation of the Grob's mix obtained using a **Polymer 1** stationary phase, and figure 6 using a **Polymer 2** stationary phase. The operating conditions were: 10m x 0.25 mm i.d. fused silica, temperature program from 40°C at 15°C $min^{-1}$ to 200°C and hold for 2 min, helium carrier gas flow rate 0.8 ml $min^{-1}$, FID, split injection (1:30). Peak identification: (D) D(-)-2,3-butanediol; (10) decane; (11) undecane; (ol) 1-octanol; (al) nonanal; (12) dodecane; (S) 2-ethylhexanoic acid; (P) 2,6-dimethylphenol; (A) 2, 6-dimethylaniline; (E11) methyl undecanoate, (am) dicyclohexylamine; ($E_{12}$) methyldodecanoate. For the **Polymer 1** stationary phase, compounds D and am show a peak trail while compound S shows a diffuse front. For the **Polymer 2** stationary phase, compounds D, ol, S and am show a peak trail.

The new phthalocyanine-polysiloxane stationary phases exhibit excellent chromatographic selectivity for all compounds with exception of methyl undecanoate which co-elutes with dicyclohexylamine. Most of the analytes were well separated with sharp peaks, except D(-)-2,3-butanediol and 2-ethylhexanoic acid which were broadened.

**EXAMPLE 11- Separation performance of PAH mixture**

The new phthalocyanine-polysilixane stationary phases showed good shape/size selectivity for polycyclic aromatic hydrocarbons (PAH). Figures 7-9 shows GC separation of a mixture of 20 PAHs on a short column of about 10 meters coated respectively with **Polymer 1, Polymer 2** and **Polymer** 5. The operating conditions were: 10m x 0.25 mm i.d. fused silica, temperature program from 100°C at 15°C $min^{-1}$ to 390°C and hold for 2 min, helium carrier gas, flow rate 0.8 ml $min^{-1}$, FID, split injection (1:30).

Peak identification: (1) naphthalene, (2) 2-methylnaphthalene, (3) biphenyl, (4) acenaphthene, (5) acenaphthylene, (6) fluorene, (7) impurity, (8) phenanthrene, (9) anthracene, (10) fluoranthene, (11) pyrene, (12) benz(a)anthracene, (13) chrysene, (14) 2-methylfluoranthene, (15) benzo(b)fluoranthene, (16) benzo(k)fluoranthene, (17) benzo(e)pyrene, (18) benzo(a)pyrene, (19) dibenz(a,h)anthracene and indeno[1,2,3-c,d]pyrene, (20) benzo(ghi)pyrene.

## Claims

**1.** Polysiloxane polymeric composition including a macrocyclic monomeric unit having:

- a siloxane monomeric unit of formula (1) [-$SiR_1R_2O$-], where $R_1$ and $R_2$ are the same or different and are each selected from an aryl, an alkenyl and an alkyl group,
- a macrocyclic monomeric unit which is a macrocycle selected from a phthalocyanine and a porphyrin,

and in which the molar percent of the siloxane monomeric unit in the polymeric composition is from 90 to 99% and the molar percent of the macrocyclic monomeric unit is from 1 to 10%.

**2.** Polysiloxane polymeric composition as claimed in claim 1, having the general formula (5):

$$RO\text{-}[\text{-}SiR_1R_2O\text{-}]_x[McM]_z\text{-}OR \qquad (5),$$

where :

$R_1$ and $R_2$ are as previously defined,
Mc is the macrocycle previously defined,
M is a central atom of the macrocycle which atom is bonded to the polymer chain,
R is selected from hydrogen, a trialkylsilyl group, an alkenyldialkylsilyl group, an alkyldiarylsilyl group, an aryldialkylsilyl group and a triarylsilyl group,
x and z are respectively molar percents of [-$SiR_1R_2O$-] and [McM] monomeric units in the polymeric composition, with x from 90 to 99% and z from 1 to 10%.

**3.** Polysiloxane polymeric composition including a macrocyclic monomeric unit having:

- a siloxane monomeric unit of formula (1) [-$SiR_1R_2O$-], where $R_1$ and $R_2$ are the same or different and are each selected from an aryl, an alkenyl and an alkyl group,
- a macrocyclic monomeric unit which is a macrocycle selected from a phthalocyanine and a porphyrin,

- a third monomeric unit of formula (6):

$$[-Si(CH_3)_2-Ar-Si(CH_3)_2-O-] \qquad (6),$$

where Ar is selected from 1,4-disubstituted benzene, 4,4'-disubstituted 1,1'-biphenyl and 4,4'-disubstituted phenoxybenzene, and
the molar percent of the siloxane monomeric unit is from 65 to 99%, the molar percent of the macrocyclic monomeric unit is from 0.1 to 5%, the molar percent of the third monomeric unit is from 1 to 35%.

**4.** Polysiloxane polymeric composition as claimed in claim 3, having the general formula (8)

$$RO-[-SiR_1R_2O-]_x[-Si(CH_3)_2-Ar-Si(CH_3)_2-O-]_y[McM]_z-OR \qquad (8)$$

where :

$R_1$, $R_2$ and Ar are as previously defined
Mc is the macrocycle previously defined,
M is a central atom of the macrocycle which atom is bonded to the polymer chain,
R is selected from hydrogen, a trialkylsilyl group, an alkenyldialkylsilyl group, an alkyldiarylsilyl group, an aryldialkylsilyl group and a triarylsilyl group,
and x, y, z are respectively molar percents of $[-SiR_1R_2O-]$, $[-Si(CH_3)_2-Ar-Si(CH_3)_2-O-]$ and [McM] monomeric units in the polymeric composition, with x is from 65 to 99%, y is from 1 to 35 %, z from 0.1 to 5%.

**5.** Polysiloxane polymeric composition as claimed in any of claims 2 and 4, wherein the central atom M is silicon.

**6.** Polysiloxane polymeric composition as claimed in any of claims 1 to 5, wherein the phthalocyanine ring is peripherally tetra substituted by an alkyl group or an aryl group, preferably tert-butyl group.

**7.** Polysiloxane polymeric composition as claimed in any of claims 1 to 6, wherein $R_1$ and $R_2$ are the same or different and are each selected from a phenyl and a methyl group.

**8.** Process for preparing a polysiloxane polymeric composition according to claim 1 or 2 comprising the following successive steps:

(A) mixing at least one alkoxysilane of formula (9) $Si(OR_3)_2R_1R_2$, where $R_1$ and $R_2$ are as defined in claim 1 and $R_3$ is an alkyl, an alkenyl or an aryl group, with a solvent and at least one macrocyclic molecule selected from the group consisting of a metallophthalocyanine, a metalloporphyrin, a metalloidphthalocyanine and a metalloidporphyrin and obtaining a first mixture, the proportions of the alkoxysilane and of the macrocyclic molecule being calculated to obtain a molar percent of a siloxane monomeric unit in the polymeric composition from 90 to 99% and a molar percent of the macrocyclic monomeric unit in the polymeric composition from 1 to 10%,
(B) adding to the first mixture of step (A) water and a catalyst selected from an acid or a base, optionally adding an end-capping agent containing a terminating group chosen from a trialkylsilyl group, an alkenyldialkylsilyl group, an alkyldiarylsilyl group, an aryldialkylsilyl group and a triarylsilyl group, optionally in a solvent, and obtaining a second mixture containing a polysiloxane polymeric composition as defined in claim 1 or 2,
(C) evaporating the solvent and eliminating water and the catalyst from the second mixture to recover the polysiloxane polymeric composition as defined in claim 1 or 2.

**9.** Process for preparing a polysiloxane polymeric composition according to claim 3 or 4 comprising the following successive steps:

(A1) mixing at least one alkoxysilane of formula (9) $Si(OR_3)_2R_1R_2$, where $R_1$ and $R_2$ are as defined in claim 3 and $R_3$ is an alkyl, an alkenyl or an aryl group, with a solvent and at least one macrocyclic molecule selected from the group consisting of a metallophthalocyanine, a metalloporphyrin, a metalloidphthalocyanine and a metalloidporphyrin and obtaining a premix, the proportions of the alkoxysilane and of the macrocyclic molecule being calculated to obtain a molar percent of a siloxane monomeric unit in the polymeric composition from 65 to 99% and a molar percent of macrocyclic monomeric unit of 0.1 to 5%,
(A2) adding to the premix of step (A1) at least one silanol of formula (10) $R''-Si(CH_3)_2-Ar-Si(CH_3)_2-R'''$ where

R" and R'" are the same or different and are each selected from an halogen, an amine group, an hydroxyl group or an alkoxy group, Ar is selected from 1,4- disubstituted benzene, 4,4'-disubstituted 1,1'- biphenyl and 4,4'-disubstituted phenoxybenzene, optionally previously dissolved in a second solvent, and obtaining a first mixture, the proportion of silanol being calculated to obtain a molar percent of the [-Si$(CH_3)_2$-Ar-Si$(CH_3)_2$-O-] unit in the polymeric composition from 1 to 35%,

(B) adding to the first mixture of step (A2) water and a catalyst selected from an acid or a base, optionally adding an end-capping agent containing a terminating group chosen from a trialkylsilyl group, an alkenyldialkylsilyl group, an alkyldiarylsilyl group, an aryldialkylsilyl group and a triarylsilyl group, optionally in a solvent, and obtaining a second mixture containing a polysiloxane polymeric composition as defined in claim 3 or 4,

(C) evaporating the solvent and eliminating water and the catalyst from the second mixture to recover the polysiloxane polymeric composition as defined in claim 3 or 4.

**10.** Process as claimed in claim 9, wherein the solvent used in step (A2) is an ether such as tetrahydrofuran and diethylether.

**11.** Process as claimed in any of claims 8 to 10, wherein the solvent used in step (A) or (A1) is a chlorinated solvent such as chloroform, dichloromethane, dichloroethane.

**12.** Process as claimed in any of claims 8 to 11, wherein the acid is selected from the group consisting of an organic acid, an inorganic acid and an anhydride acid and the base is selected from the group consisting of alkali hydroxides, earth alkali hydroxides and amines.

**13.** Process as claimed in any of claims 8 to 12, wherein step (B) include three to four successive phases :

- a first phase in which the solution formed by addition of water and the catalyst to the first mixture of step (A) or (A2) is stirred for at least 20 hours,
- a second phase during which the stirred solution is partially evaporated to eliminate at least 50% of the volume of the solution to form a concentrated solution,
- a third stage during which the concentrated solution is not stirred and allowed to stand at room temperature for at least 20 hours,
- an optional fourth stage during which an end-capping agent containing a terminating group chosen from a trialkylsilyl group, an alkenyldialkylsilyl group, an alkyldiarylsilyl group, an aryldialkylsilyl group and a triarylsilyl group, optionally in a solvent, is added to the solution of the third stage,

and obtaining the second mixture containing the polysiloxane polymeric composition.

**14.** Use of a polysiloxane polymeric composition as claimed in any of claims 1 to 7 as a stationary phase in a capillary column for gas chromatography analysis, in particular high-temperature gas chromatography, optionally for analysis of a hydrocarbon mixture.

**15.** Capillary column for gas chromatography comprising a capillary tube having an internal surface, and deposited on this internal surface, a film of the polysiloxane polymeric composition as claimed in any one of claims 1 to 7.

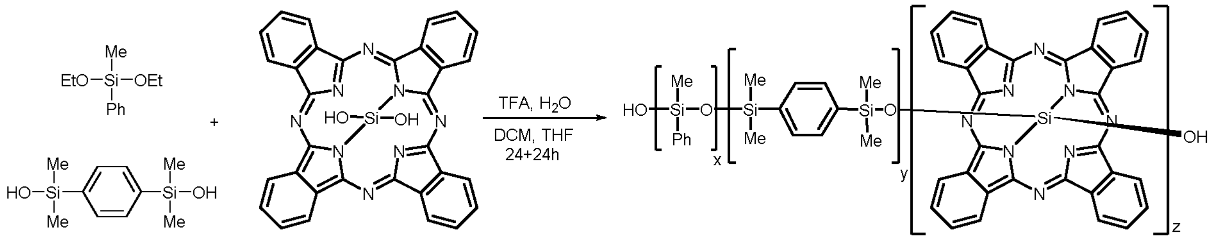


Figure 1

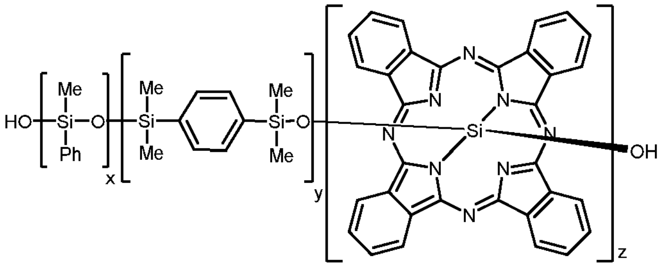

Figure 2

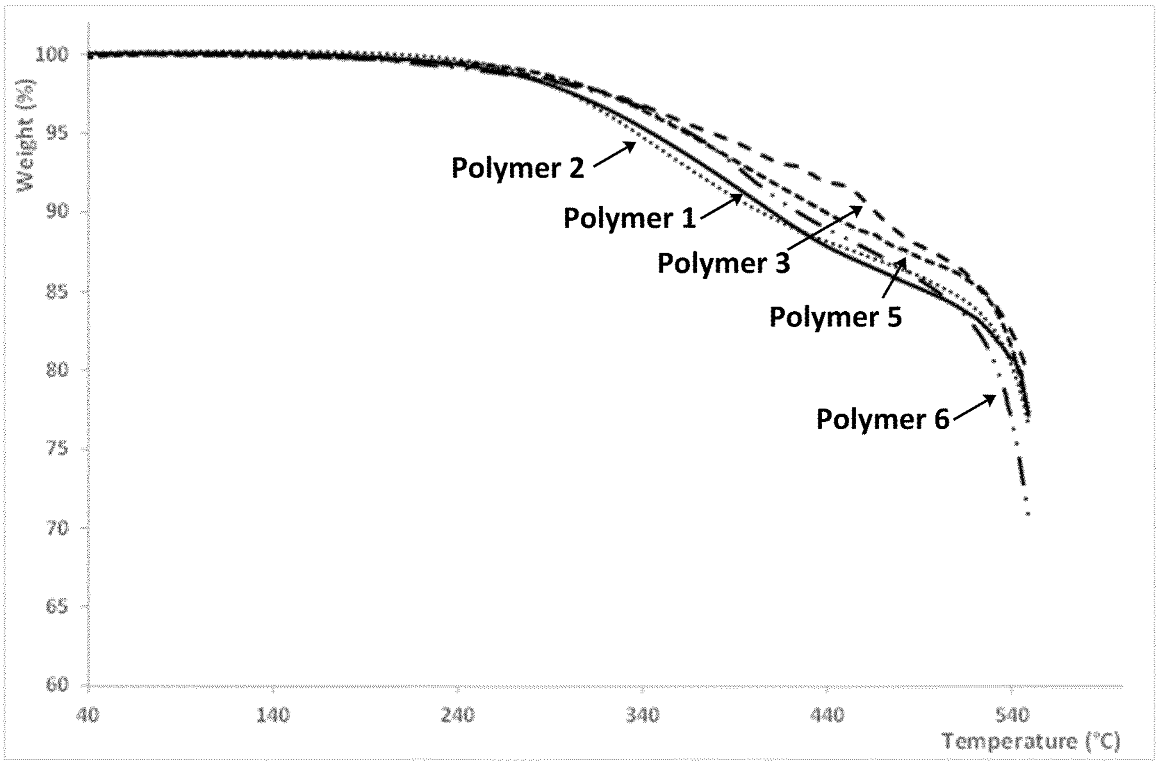


Figure 3

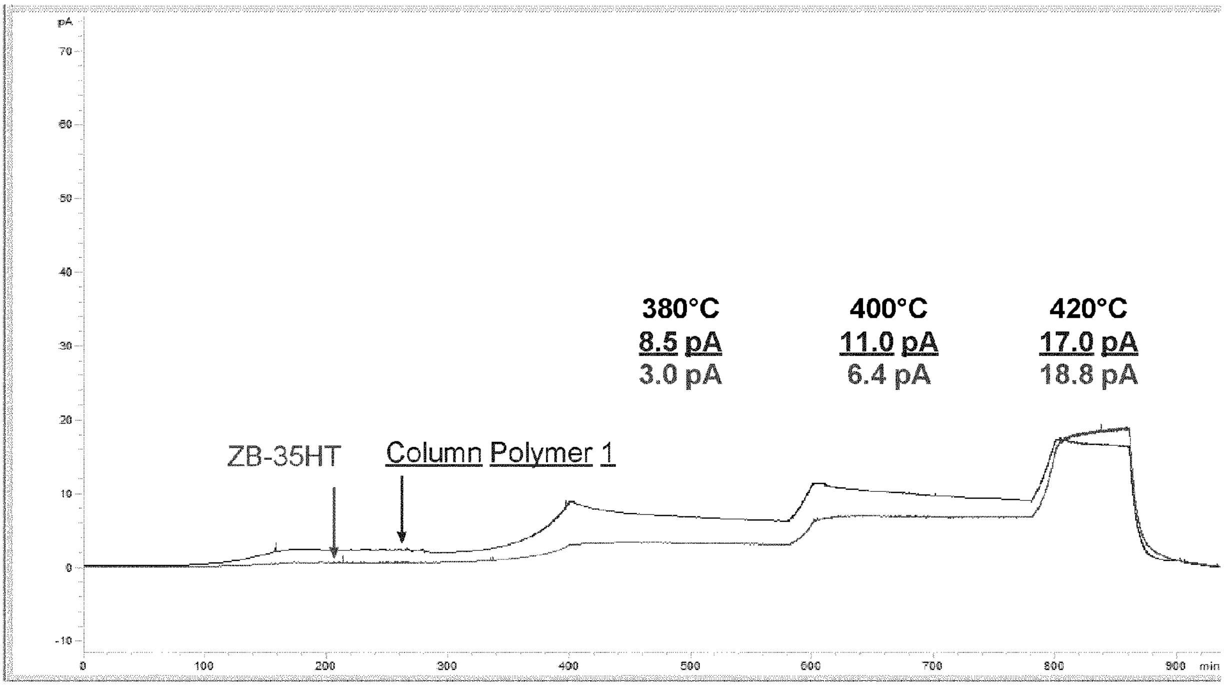


Figure 4

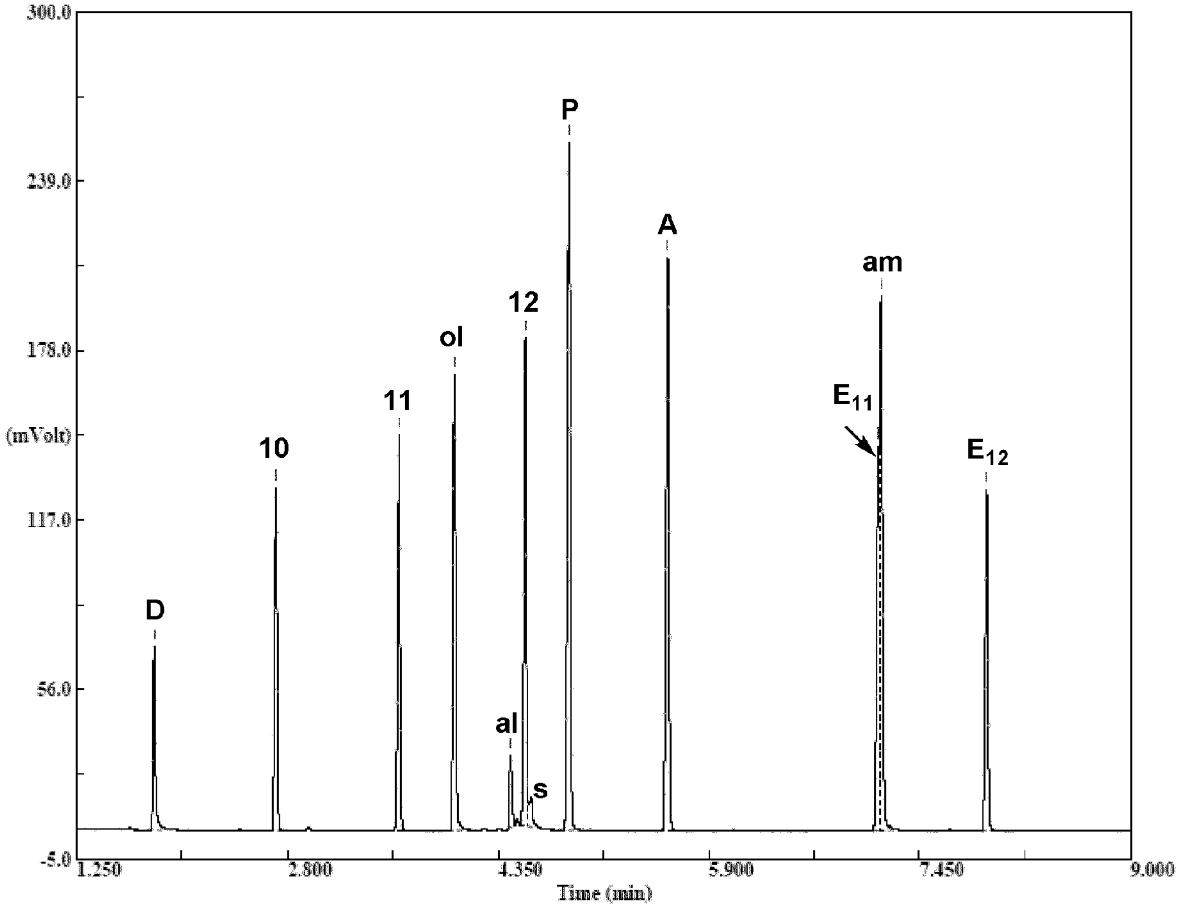


Figure 5

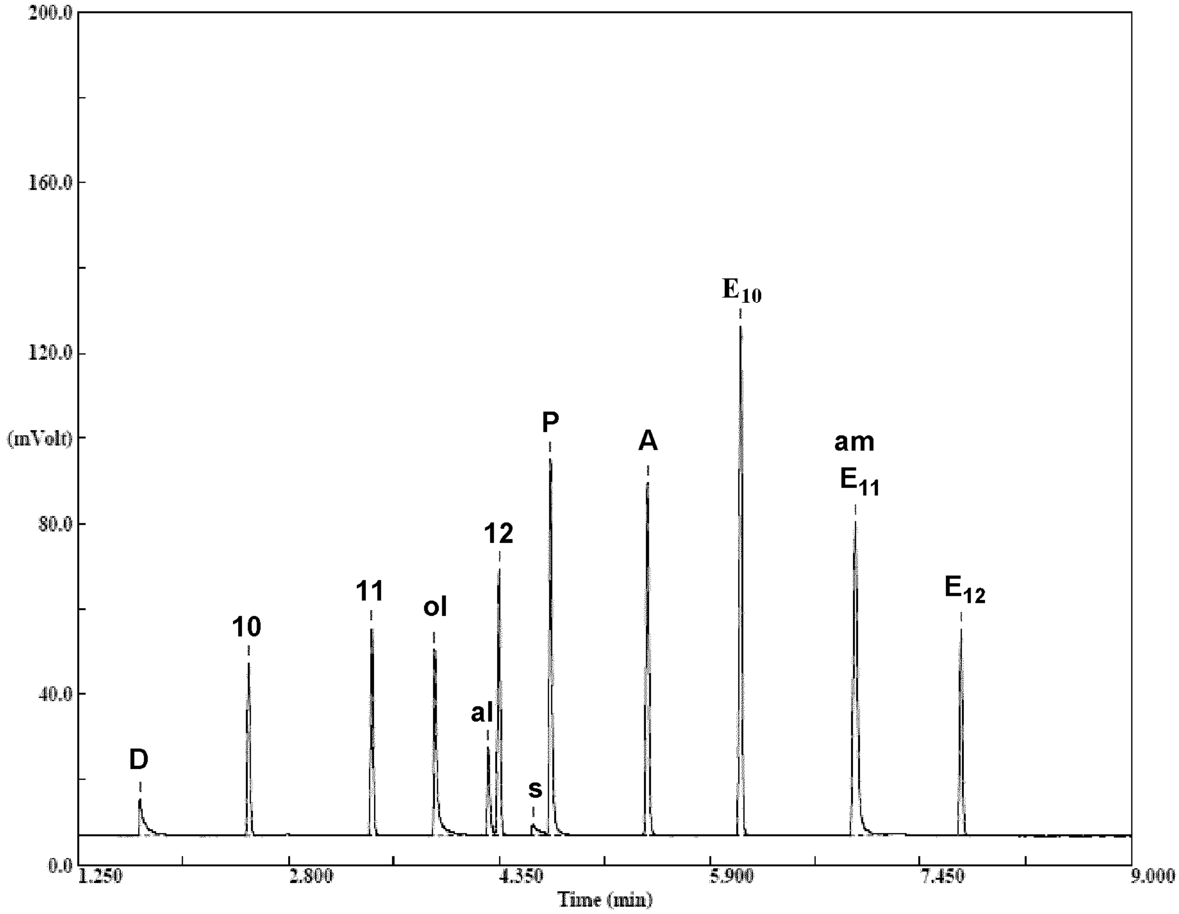
200.0
160.0
120.0
(mVolt)
80.0
40.0
0.0
1.250
2.800
4.350
5.900
7.450
9.000
Time (min)
D
10
11
ol
al
12
s
P
A
$E_{10}$
am
$E_{11}$
$E_{12}$

Figure 6

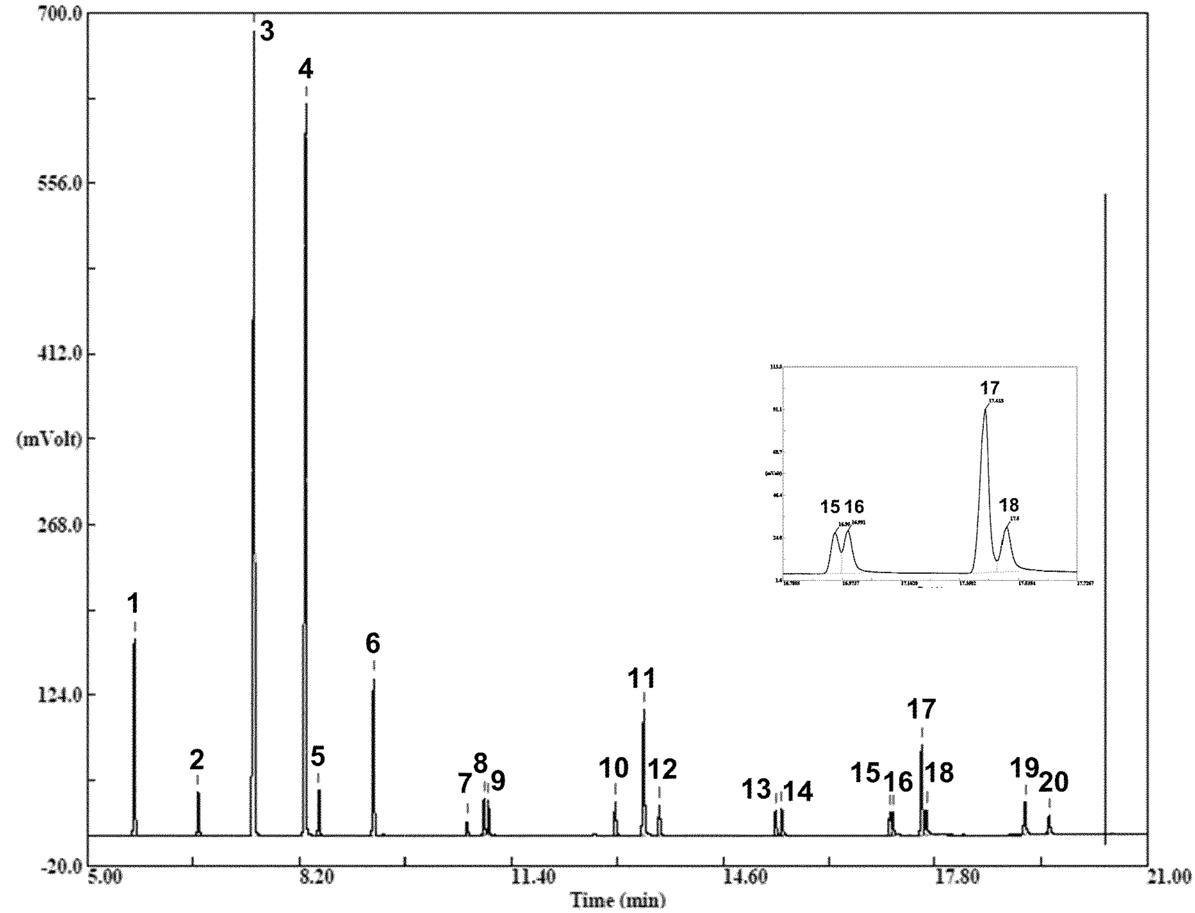
700.0
556.0
412.0
(mVolt)
268.0
124.0
-20.0
5.00
8.20
11.40
14.60
17.80
21.00
Time (min)
1
2
3
4
5
6
7
8
9
10
11
12
13
14
15
16
17
18
19
20

Figure 7

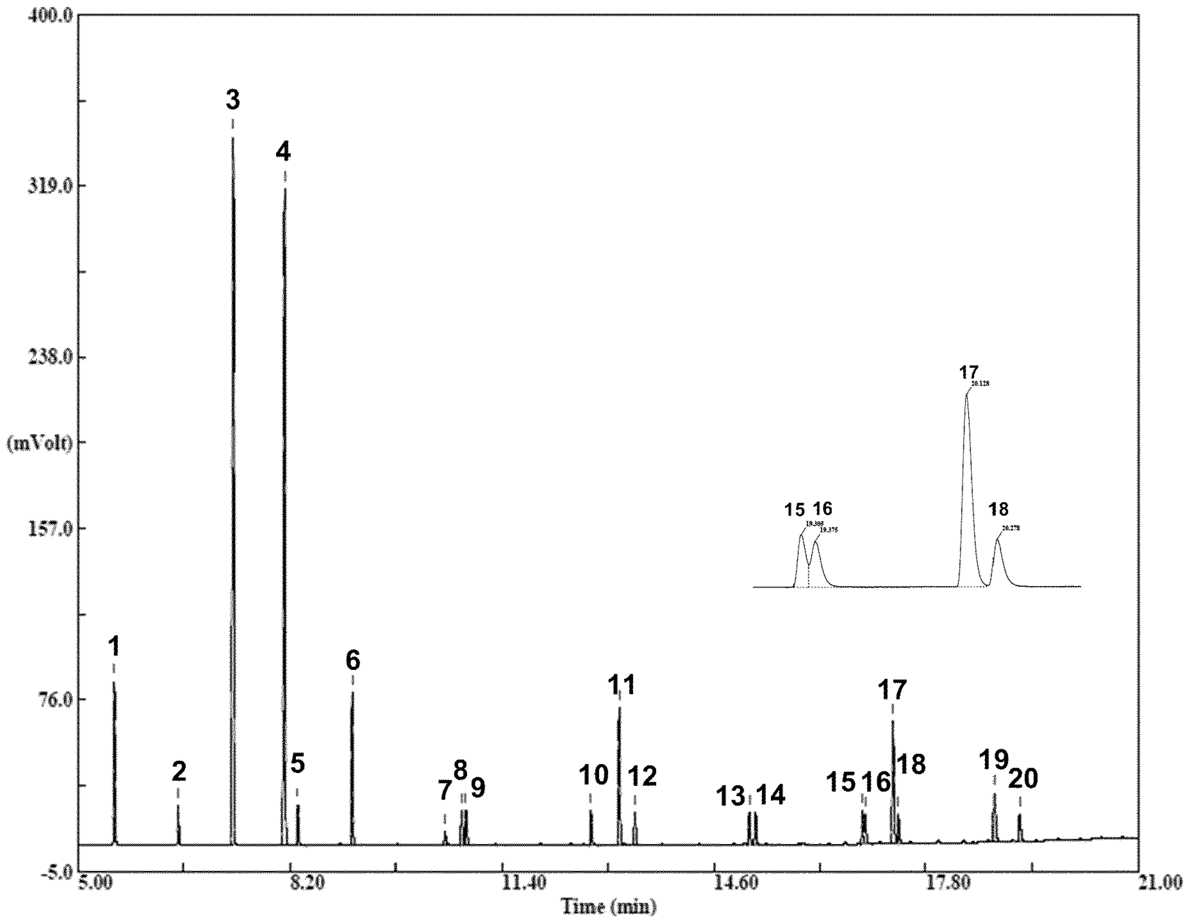

400.0
319.0
238.0
(mVolt)
157.0
76.0
-5.0
5.00
8.20
11.40
14.60
17.80
21.00
Time (min)
1
2
3
4
5
6
7
8
9
10
11
12
13
14
15
16
17
18
19
20


Figure 8

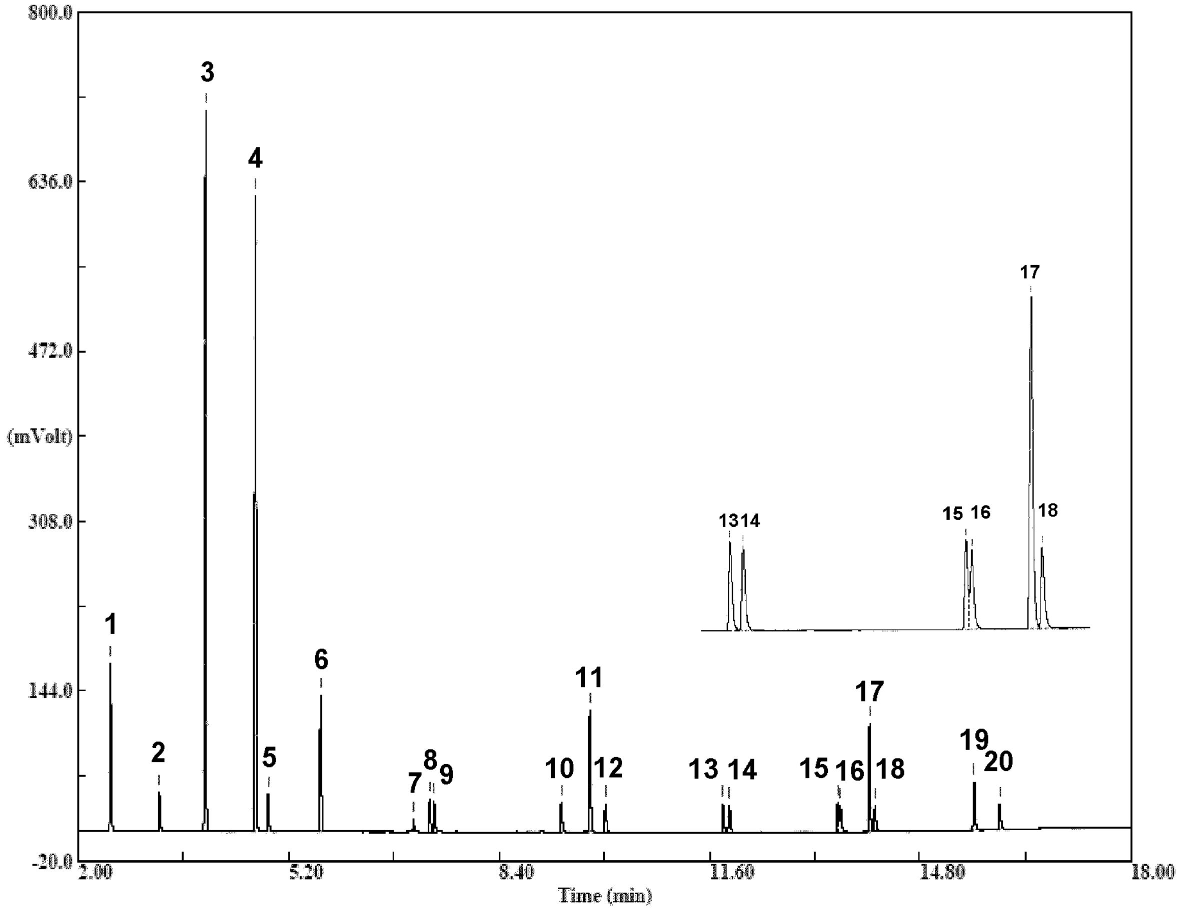
800.0
636.0
472.0
(mVolt)
308.0
144.0
-20.0
2.00
5.20
8.40
11.60
14.80
18.00
Time (min)
1
2
3
4
5
6
7
8
9
10
11
12
13
14
15
16
17
18
19
20
13
14
15
16
17
18

Figure 9

Europäisches Patentamt
European Patent Office
Office européen des brevets

# EUROPEAN SEARCH REPORT

Application Number
EP 21 30 5441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 4 132 842 A (WYNNE KENNETH J ET AL) 2 January 1979 (1979-01-02)<br>* column 1, line 60 - column 2, line 48 *<br>* column 9, lines 8-27 *<br>* claims 1-5 * | 1,2,5-7<br>3,4,8-15 | INV.<br>C08G77/06<br>C08G77/16<br>C08G77/20<br>C08G77/26<br>C08G77/00<br>C09D183/08 |
| X<br>A | US 2013/150571 A1 (BANNING JEFFERY H [US] ET AL) 13 June 2013 (2013-06-13)<br>* page 1, paragraph 5 *<br>* page 5, paragraph 80 *<br>* page 7, line 3, paragraph 125 *<br>* page 8, paragraph 135 *<br>* example III * | 1,2,6,7<br>3-5,8-15 | |
| X<br>A | US 4 977 068 A (KALYANARAMAN PALAIYUR S [US]) 11 December 1990 (1990-12-11)<br>* column 2, lines 53-68 *<br>* column 3, lines 22-47 *<br>* column 4, line 62 - column 5, line 32 *<br>* column 6, lines 13-21 * | 1,2,6,7<br>3-5,8-15 | TECHNICAL FIELDS SEARCHED (IPC) |
| A | ETTOUNEY H M ET AL: "Subject Index", JOURNAL OF CHROMATOGRAPHY A, ELSEVIER, AMSTERDAM, NL, vol. 861, no. 2, 17 December 1999 (1999-12-17), pages B511-B537, XP004202664, ISSN: 0021-9673, DOI: 10.1016/S0021-9673(00)86516-4<br>* page B520, left-hand column * | 1-15 | C08G<br>C08L<br>C07F<br>C09B<br>G11B<br>C08J<br>C09D |
| A | US 3 639 498 A (VLISMAS THEODORE) 1 February 1972 (1972-02-01)<br>* column 1, lines 14-21 *<br>* column 4, lines 24-48 * | 1-15 | |

The present search report has been drawn up for all claims

1

| Place of search | Date of completion of the search | Examiner |
|---|---|---|
| The Hague | 30 September 2021 | Denis, Cécile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 30 5441

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2021

| Patent document cited in search report | | Publication date | Patent family member(s) | | Publication date |
|---|---|---|---|---|---|
| US 4132842 | A | 02-01-1979 | NONE | | |
| US 2013150571 | A1 | 13-06-2013 | JP 2013122051 | A | 20-06-2013 |
| | | | US 2013150571 | A1 | 13-06-2013 |
| US 4977068 | A | 11-12-1990 | NONE | | |
| US 3639498 | A | 01-02-1972 | DE 1773665 | A1 | 30-03-1972 |
| | | | FR 1573349 | A | 04-07-1969 |
| | | | US 3639498 | A | 01-02-1972 |

EPO FORM P0459

For more details about this annex : see Official Journal of the European Patent Office, No. 12/82